# EUROPÄISCHE PATENTSCHRIFT

(11) **EP 1 264 482 B1**
(45) Veröffentlichungstag und Bekanntmachung des Hinweises auf die Patenterteilung: **26.11.2003**
(21) Anmeldenummer: 00952825.8
(22) Anmeldetag: 15.08.2000
(51) Int. Cl.: H04N 7/16

(54) **VERFAHREN UND KOMMUNIKATIONSSYSTEM FÜR DIE VERRECHNUNG VON ZUGRIFFSKONTROLLIERTEN PROGRAMMEN UND/ODER DATEN VON BROADCASTSENDERN**
METHOD AND COMMUNICATION SYSTEM FOR THE BILLING OF ACCESS CONTROLLED PROGRAMMES AND/OR DATA FROM BROADCAST TRANSMITTERS
PROCEDE ET SYSTEME DE COMMUNICATION POUR LA FACTURATION DE PROGRAMMES ET/OU DE DONNEES A ACCES CONTROLE D'EMETTEURS DE DIFFUSION

(30) Priorität: 10.03.2000 WO PCT/CH00/00142
(43) Veröffentlichungstag der Anmeldung: 11.12.2002
(73) Patentinhaber: RITTER, Rudolf, 3052 Zollikofen (CH)
(72) Erfinder: RITTER, Rudolf, CH-3052 Zollikofen (CH); TRINCHAN, Claude, CH-1762 Givisiez (CH)
(74) Vertreter: Wenger, Joel-Théophile
(86) Internationale Anmeldenummer: CH0000435
(87) Internationale Veröffentlichungsnummer: WO01067762

(56) Entgegenhaltungen:
- EP-A- 0 128 555
- EP-A- 0 314 203
- EP-A- 0 789 337
- WO-A-91/18467
- DE-A- 19 846 452
- US-A- 4 710 955
- US-A- 5 619 247
- PATENT ABSTRACTS OF JAPAN vol. 010, no. 289 (E-442), 2. Oktober 1986 (1986-10-02) & JP 61 108273 A (SONY CORP), 26. Mai 1986 (1986-05-26)

## Beschreibung

Die vorliegende Erfindung betrifft ein Verfahren, ein Kommunikationssystem und eine Empfangsvorrichtung für die Verrechnung von zugriffskontrollierten Programmen und/oder Daten, die verschlüsselt und unidirektional von einem Broadcastsender verbreitet werden. Insbesondere betrifft die vorliegende Erfindung ein Verfahren, ein Kommunikationssystem und eine Empfangsvorrichtung für die Verrechnung von zugriffskontrollierten Programmen und/oder Daten über ein Mobilfunknetz, im Speziellen ein GSM-, GPRS oder UMTS-Netz.

Weltweit werden zur Zeit Broadcastsysteme mit Broadcastsendern und Broadcastempfängern aufgebaut, in denen digitale Audio-, respektive Video-Programme (Fernsehprogramme), und digitale Daten, beispielsweise Daten für die Ausführung von Datendiensten oder programmbegleitende Daten mit Bezug zu den betreffenden Programmen (Program Associated Data, PAD) oder auch Daten im allgemeinen (Non Program Associated Data, NPAD) von den Broadcastsendern unidirektional verbreitet, beispielsweise mittels von terrestrischen oder satellitenbasierten Sendern ausgestrahlten Radiowellen oder über Broadcastkabelnetze, und von entsprechenden Broadcastempfängern empfangen werden. Solche Broadcastsysteme sind beispielsweise unter der Bezeichnung Digital Audio Broadcasting (DAB), respektive Digital Video Broadcasting (DVB) bekannt. Mittels dieser Broadcastsysteme können insbesondere auch zugriffskontrollierte Programme und/oder Daten verbreitet werden. Zugriffskontrollierte Programme und/oder Daten werden verschlüsselt (scrambled) verbreitet und können nur von berechtigten Benutzern mittels Broadcastempfängern empfangen und entschlüsselt (descrambled) werden. Die unidirektionale Verbreitungseigenschaft dieser Broadcastsysteme hat allerdings den Nachteil, dass, insbesondere bei der Übertragung mittels Radiowellen, ein Rückkanal von den Broadcastempfängern zu den Broadcastsendem, respektive zu deren Betreibern, fehlt. Bedingt durch diesen fehlenden Rückkanal sind die Möglichkeiten für die Verrechnung von zugriffskontrollierten Programmen und/oder Daten beschränkt. Im allgemeinen werden zugriffskontrollierte Programme und/oder Daten in diesen Broadcastsystemen so verrechnet, dass interessierten Benutzern von den Anbietem, beispielsweise die Betreiber der Broadcastsender, Abonnemente für verschiedene Programme und/oder Datendienste gegen Abonnementsgebühren ausgestellt werden, beispielsweise Abonnemente für spezifische Themen oder Programme, die während einer Abonnementsdauer bezogen werden können. Entsprechend dem im voraus oder nachträglich bezahlten Abonnement werden dem betreffenden Benutzer Berechtigungsdaten für die abonnierten Dienste in den Broadcastempfänger geladen, beispielsweise durch direkte Adressierung über den Broadcastkanal oder mittels einem Datenträger. Diese Art der Verrechnung per Abonnement ist für die Benutzer insbesondere dann unvorteilhaft, wenn sie zugriffskontrollierte Programme und/oder Daten von mehreren Anbietern, respektive von mehreren Broadcastsendern, beziehen möchten, da sie Abonnemente mit mehreren Anbietem abschliessen müssen. Die Verrechnung per Abonnement ist für die Benutzer auch deshalb unvorteilhaft, weil sie nicht spontan zugriffskontrollierte Programme und/oder Daten beziehen können, für die sie kein Abonnement gelöst haben. Ein weiterer Nachteil der Verrechnung per Abonnement liegt darin, dass die Anbieter, respektive die Betreiber der Broadcastsender, keine direkte Information darüber erhalten, welche abonnierten Dienste durch die Benutzer auch tatsächlich bezogen wurden. Aus der Sicht der Benutzer scheint die Verrechnung per Abonnement zudem keine faire Verrechnungsmethode zu sein, da sie für Abonnemente unabhängig davon bezahlen müssen, ob sie die abonnierten Dienste beziehen oder nicht. Insbesondere für Betreiber von kleineren Broadcastsendern, respektive von kleineren Anbietern von zugriffskontrollierten Programmen und/oder Daten, ist zudem der Aufwand für die Verwaltung solcher Abonnemente und für die Verrechnung solcher Dienste zu aufwendig. Ein anderer Nachteil des Standes der Technik ist, dass für den Anbieter falls überhaupt nur sehr schwer Daten über das Benutzerverhalten verfügbar sind, welche das Benutzerverhalten zudem ungenau wiedergeben. Dies macht es für ihn schwierig, schnell auf Benutzerwünsche oder geändertes Benutzerverhalten einzugehen. Genaue statistische Daten über das Benutzerverhalten sowie ein einfaches, billiges Verrechnungssystem würden einem Broadcastanbieter kaum zu überschätzende Vorteile gegenüber seiner Konkurrenz verschaffen. Als Stand der Technik finden sich auch erweiterte Broadcast-Systeme mit einer Set-Top-Box, die z.B. die Benut zeridentifizierung mit einem separaten Mobilfunkgerät über das Mobilfunknetz erlaubt, wie es in der Patentschrift DE19846452A1 gezeigt ist. Z.B. identifiziert sich der Benutzer über das Mobilfunkgerät bei einem Mobilfunk-Dienstanbieter, welcher nach Feststellung einer Zugriffsberechtigung des Benutzers für die zugriffskontrollierten Broadcastprogramme der Set-Top-Box die Erlaubnis zum Entschlüsseln des gewünschten Broadcastprogrammes erteilt. Der Stand der Technik enthält ebenfalls solche Set-Top-Boxes mit integriertem Chipkartenlesegerät, womit die Vergütung der vom Benutzer in Anspruch genommenen kostenpflichtigen Broadcastprogramme über das Abbuchen eines Geldbetragswertes von einem auf einer Chipkarte gespeicherten Geldbetragswert (Prepaid-Verfahren) möglich wird. Als Beispiel dazu kann die Patentschrift EP0789337A2 dienen.

Es ist eine Aufgabe der vorliegenden Erfindung, ein neues und besseres Verfahren, ein neues und besseres Kommunikationssystem sowie eine neue und bessere Empfangsvorrichtung vorzuschlagen, die für die Verrechnung von zugriffskontrollierten Programmen und/oder Daten geeignet sind, die verschlüsselt und unidirektional von einem Broadcastsender verbreitet werden, und die insbesondere nicht die oben angeführten Nachteile aufweisen.

Gemäss der vorliegenden Erfindung werden diese Ziele insbesondere durch die Elemente der unabhängigen Ansprüche erreicht. Weitere vorteilhafte Ausführungsformen gehen ausserdem aus den abhängigen Ansprüchen und der Beschreibung hervor.

Insbesondere werden diese Ziele durch die Erfindung dadurch erreicht, dass zugriffskontrollierte Programme und/oder Daten verschlüsselt und unidirektional von einem Broadcastsender verbreitet werden und von mindestens einer Empfangsvorrichtung empfangen werden, wobei für den Zugriff auf zugriffskontrollierte Programme und/oder Daten durch einen Benutzer der Empfangsvorrichtung die verschlüsselt verbreiteten zugriffskontrollierten Programme und/oder Daten in der Empfangsvorrichtung entschlüsselt werden, wenn empfangene Zugriffsbedingungsdaten der zugriffskontrollierten Programme und/oder Daten mit Berechtigungsdaten des Benutzers übereinstimmen, dass Zugriffsrequestdaten für einen Zugriff auf zugriffskontrollierte Programme und/oder Daten von der Empfangsvorrichtung an eine Zentraleinheit übermittelt werden, wobei mindestens ein Teil der Zugriffsrequestdaten vom Benutzer anhand der empfangenen Zugriffsbedingungsdaten bestimmt wird, dass die Zentraleinheit mindestens Teile der Berechtigungsdaten entsprechend den übermittelten Zugriffsrequestdaten an die Empfangsvorrichtung übermittelt, dass Clearingdaten von der Zentraleinheit an ein Clearingmodul der Zentraleinheit übermittelt werden, welche Clearingdaten Verrechnungsdaten für den genannten Zugriff auf die unverschlüsselten zugriffskontrollierten Programme und/oder Daten sowie Benutzerdaten umfassen und welche Benutzerdaten Informationen über den Zugriff umfassen und dass das Clearingmodul entsprechend den empfangenen Clearingdaten dem Anbieter der zugriffskontrollierten Programme und/oder Daten sowie dem Benutzer Leistungen gutschreibt und/oder belastet und/oder dem Anbieter Informationen zur Verfügung stellt, welche Informationen durch die Zentraleinheit gemäss festgelegten Weiterverwendungsbedingungen basierend auf den Benutzerdaten generiert werden. Die Programme umfassen beispielsweise digitale Audio- und/oder Videoprogramme. Der Vorteil dieser Erfindung liegt insbesondere darin, dass durch die Kombination von der Broadcast-Plattform und einer bidirektionalen Kommunikationsplattform, wie z.B. einem Mobilfunknetz, wie ein GSM- (Global System for Mobile communication), GPRS- (Generalized Packet Radio Service) oder UMTS-Netz (Universal Mobile Telephone System), die beiden Plattformen gemeinsamen Hard- und Softwarekomponenten zusammen benutzt werden können und gleichzeitig von den Vorteilen der jeweils anderen Plattform profitiert werden kann. Durch das hier vorgestellte Verfahren und das dem Verfahren entsprechende Kommunikationssystem wird die Verrechnung von zugriffskontrollierten Broadcastprogrammen stark vereinfacht. Die Vereinfachung geht einher mit einem hohen Sicherheitsstandard vor betrügerischen Eingriffen. So ist die Benutzeridentifikation in Mobilfunknetzen z.B. Ober die dem Anschluss zugeordneten MSISDN (Mobile Subscriber ISDN) oder IMSI (International Mobile Subscriber Identification) möglich. Die eindeutige und sichere Benutzeridentifikation ist insbesondere in der Verrechnung der Kosten für die zugriffskontrollierten Programme und/oder Daten wichtig. Die Übergabe der Schlüssel zur Entschlüsselung der verschlüsselten zugriffskontrollierten Programme und/oder Daten kann über das Kommunikationnetz erfolgen, ohne dass irgendwelche weiteren Installationen (hardware- oder softwareseitig) von Seiten des Broadcastanbieters notwendig wären. Dies erlaubt es einem Benutzer, spontan zugriffskontrollierte Programme und/oder Daten zu beziehen, ohne dass er dafür vorgängig ein Abonnement lösen muss, und ohne dass das Verfahren dem Benutzer dabei notwendigerweise irgendwelche Kostenlimiten setzen müsste. Insbesondere wird dem Benutzer der spontane Bezug von zugriffskontrollierten Programmen und/oder Daten von mehreren Anbietern, respektive verschiedenen Broadcastsendern ermöglicht, ohne dass dafür durch die Benutzer Abonnemente mit all diesen Anbietern abgeschlossen werden müssen. Für die Anbieter, respektive Betreiber der Broadcastsender, bedeutet die Verrechnung über eine Zentraleinheit zudem eine wesentliche Entlastung, da sie sich weder mit der Verwaltung von Abonnementen noch mit der detaillierten Verrechnung der Kosten beschäftigen müssen. Insbesondere ist ebenfalls einer der Vorteile, dass statistische Benutzerverhalten von der Zentraleinheit erfasst werden können und falls es den mit den Benutzern festgelegten Weiterbenutzungsbedingungen entspricht, dem Broadcastanbieter zur Verfügung gestellt werden können. Damit kann ein Broadcastanbieter leicht und flexibel Benutzerverhalten analysieren, erkennen und den Sendeplan des Broadcastsenders den Benutzerwünschen leicht und flexibel anpassen.

In einer Ausführungsvariante generiert die Zentraleinheit zur Entschlüsselung der zugriffskontrollierten Programme und/oder Daten gemäss den empfangenen Zugriffsrequestdaten ein Datatoken und übermittelt diesen an die Empfangsvorrichtung, wobei ein Datatoken jeweils Daten, welche mindestens Teile eines entsprechenden Schlüssels zu den zugriffskontrollierten verschlüsselten Programmen und/oder Daten umfassen, oder eine Zugriffserlaubnis auf einen Schlüssel zum Entschlüsseln von zugriffskontrollierten Programmen und/oder Daten umfasst. Der Datatoken kann ebenfalls verschlüsselt (z.B. auch via Public Key Krypthographie, wie z.B., auch SSL (Secure Sockets Layer), HTTPS etc.) oder elektronisch signiert sein. Der Vorteil, dass die Schlüssel zur Entschlüsselung der zugriffskontrollierten Daten und/oder Programme zentral abgespeichert und abgerufen werden können, liegt u.a. darin, dass die Broadcastanbieter beliebig oft den Schlüssel wechseln können z.B. zeitlich oder für verschiedene Datensätze der zugriffskontrollierten verschlüsselten Programme und/oder Daten. Ändert der Anbieter seine Schlüssel, so braucht er die Schlüssel nur an einem zentralen Ort zu aktualisieren. Der Benutzer kann z.B. nur gerade auf einen Film eines Broadcastanbieters zugreifen, ohne dass er beim Anbieter ein Abonnement u.a. lösen müsste.

In einer Ausführungsvariante umfassen die Zugriffsrequestdaten mindestens gewisse der Weiterverwendungsbedingungen für die Benutzerdaten, welche mindestens gewisse Weiterverwendungsbedingungen vom Benutzer über die Eingabeelemente der Empfangsvorrichtung festgelegt werden. Ein Vorteil der Ausführungsvariante ist, dass der Benutzer Kontrolle über die von ihm wiederverwendeten Benutzerdaten, welche z.B. sein Benutzerverhalten beschreiben, hat. Es ist mit dieser Ausführungsvariante auch vorstellbar, dass der Anbieter die Verwendung der Benutzerdaten dem Benutzer vergütet. Z.B. das Schauen eines Sendekanals mit Werbung über eine gewisse Zeit durch den Benutzer könnte durch den Gratiszugang zu einem Videofilm oder Ähnlichem vergütet werden. Dies war im Stand der Technik bis anhin so nicht möglich.

In einer weiteren Ausführungsvariante umfassen die Zugriffsbedingungsdaten Kostenparameter, welche die Kostenbeträge für den Zugriff auf die zugriffskontrollierten Programme und/oder Daten pro Berechnungseinheit umfassen. Berechnungseinheiten sind z. B. ganze Programmeinheiten wie beispielsweise ganze Videofilme, Zeiteinheiten, übermittelte Datenmengen etc. Diese Ausführungsvariante hat u.a. den Vorteil, dass ein Anbieter für verschiedene zugriffskontrollierten Programme und/oder Daten, welche z.B. zeitlich verschoben über einen Broadcastkanal gesendet werden, verschieden hohe Gebühren verlangen kann. Es besteht durch diese Ausführungsvariante auch die Möglichkeit, dass vom Benutzer für den Zugriff auf verschiedene gebührenpflichtige, zugriffskontrollierte Programme und/oder Daten jeweils sein explizites Einverständnis über die Zugriffsrequestdaten verlangt werden kann. Dies erhöht die Sicherheit des Benutzers vor unvorhergesehenen Kosten.

In einer Ausführungsvariante umfassen die Verrechnungsdaten Verrechnungsparameter zur Belastung oder Gutschrift von Geldbetragswerten an den Benutzer und/oder den Anbieter gemäss den bezogenen zugriffskontrollierten Programmen und/oder Daten. Die Verrechnungsparameter sind beispielsweise Start- und Endzeit oder Zeitdauer sowie die Kosten pro Zeiteinheit der bezogenen Programme und/oder Daten oder allgemeiner die Anzahl Berechnungseinheiten sowie die Kosten pro Berechnungseinheit der bezogenen Programme und/oder Daten. Diese Ausführungsvariante hat u.a. den Vorteil, dass die Kosten oder Gutschriften für den Zugriff auf die zugriffskontrollierten verschlüsselten Programme und/oder Daten für den Benutzer in kontrollierbarer Art und zudem von einem beispielsweise vom Anbieter unabhängigen Clearingsystem durchgeführt werden können. Dies gibt dem Benutzer Schutz vor missbräuchlichen Belastungen durch den Anbieter. Insbesondere gibt dies die variablen Möglichkeiten von Gutschriften und Belastungen auf beiden Seiten, d.h. auf Seiten des Benutzers wie auch des Anbieters für einzelne Leistungen vollständig neue Nutzungsmöglichkeiten eines Broadcastsenders. So können durch die Möglichkeit der wechselseitigen Belastung und/oder Gutschrift von Leistungen beispielsweise auch Spiele, wie z.B. Geldspiele, Lotterien etc. über den Broadcastkanal durchgeführt werden.

In einer weiteren Ausführungsvariante weist die Belastung und/oder Gutschrift bei der Verrechnung des genannten Zugriffs durch die Zentraleinheit den Geldbetragswert 0 auf. Dies hat u.a. den Vorteil, dass die Vergütung für den Zugriff auf die zugriffskontrollierten Programme und/oder Daten nicht notwendigerweise Belastungen oder Gutschriften von Geldbetragswerten umfassen muss. Z.B. kann das Einverständnis des Benutzers in den von ihm festlegbaren Zugriffsrequestdaten zu einer erweiterten Benutzung der Benutzerdaten durch den Anbieter anstelle einer Vergütung mit Geldbetragswerten stehen etc.

In einer weiteren Ausführungsvariante werden die Clearingdaten mindestens teilweise vor, nach oder periodisch während des Zugriffs auf die zugriffskontrollierten Programme und/oder Daten von der Empfangsvorrichtung an die Zentraleinheit übermittelt. Die periodische Übermittlung kann z.B. via GSM/SMS (Short Message Service), GSM/USSD (Unstructured Supplementary Service Data), GPRS oder UMTS geschehen. Dies hat den Vorteil, dass z.B. das Schauen eines Videofilms zu jedem Zeitpunkt abgebrochen werden kann, und nur die Kosten für die bereits konsumierte Zeit berechnet werden kann. Die Übermittlung vor dem Zugriff hat hingegen den Vorteil, dass nach dem Empfang des Datatoken mit dem Schlüssel oder eine Zugriffserlaubnis auf einen Schlüssel zum Entschlüsseln der gewünschten zugriffskontrollierten Programme und/oder Daten keine weitere Kommunikation zwischen der Zentraleinheit und der Empfangsvorrichtung notwendig ist. So ist es vorstellbar, dass ein Benutzer einen Schlüssel mit Zugriffsrequestdaten erstehen und den Schlüssel dann an einen anderen Benutzer weitergeben kann.

In einer Ausführungsvariante wird ein Geldbetragswert in einem Datenspeicher der Empfangsvorrichtung gespeichert, werden in der Empfangsvorrichtung basierend auf den Kostendaten der empfangenen Zugriffsbedingungsdaten Kosten für den Zugriff auf die zugriffskontrollierten Programme und/oder Daten bestimmt und werden Clearingdaten periodisch an die Zentraleinheit übermittelt, wenn die bestimmten Kosten den gespeicherten Geldbetragswert oder ein ganzes Vielfaches davon überschreiten und/oder ein vordefiniertes Zeitfenster abgelaufen ist. Diese Ausführungsvariante hat die gleichen Vorteile wie die vorhergehende Ausführungsvariante.

In einer Ausführungsvariante umfassen die von der Empfangsvorrichtung an die Zentraleinheit übermittelten Clearingdaten Daten, welche der Benutzer vor der Übermittlung bestimmt. Dies hat den Vorteil, dass der Benutzer z.B. Kritik, Bewertung oder Bemerkungen zu einem Film, Programm oder dem Sendeplan etc. geben kann. Über die Plattform der Clearingeinheit entsteht damit eine indirekte bidirektionale Kommunikationsmöglichkeit zwischen dem Benutzer und dem Anbieter.

In einer weiteren Ausführungsvariante verändert der Anbieter der zugriffskontrollierten Programme und/oder Daten den Sendeplan für die Verbreitung von zugriffskontrollierten Programmen und/oder Daten entsprechend von Benutzerdaten. Die Änderung kann manuell oder automatisch geschehen. Ein Vorteil der Ausführungsvariante ist, dass der Benutzer durch sein Benutzerverhalten direkten Einfluss auf den Sendeplan bekommt (z.B. durch anonyme, statistisch ausgewertete Benutzerdaten oder Benutzerdaten eines bestimmten Benutzers, wie z.B. die direkte Bestellung oder den Wunsch eines bestimmten zugriffskontrollierten Programms und/oder Daten). Der Anbieter kann z.B. flexibel auf das Kundenverhalten und Kundenwünsche eingehen, z.B. Filme einer bestimmten Art häufiger ausstrahlen (z.B. Liebesfilme oder Abenteurerfilme etc.), falls von den Benutzern häufiger auf sie zugegriffen wird.

In einer weiteren Ausführungsvariante umfassen die Zugriffsrequestdaten vom Benutzer über Eingabeelemente des Empfangsgerätes festlegbare Daten, mit welchen der Benutzer dem Anbieter individuelle Wünsche und/oder Bestellungen für die Ausstrahlung bestimmter zugriffskontrollierter Programme und/oder Daten angibt. Einer der Vorteile dieser Ausführungsvariante ist, dass der Benutzer direkten Einfluss auf den Sendeplan des Broadcastanbieters haben kann, z.B. ähnlich den populären Wunschkonzerten bei Rundfunksendern. Ein anderes Beispiel eines Vorteils ist, dass mit dem Verfahren sich u.a. auch der Zugriff auf personifizierte Multimediadaten realisieren lässt, indem der Benutzer seine Bestellung in den Zugriffsrequestdaten festlegt, worauf der Anbieter die gewünschten Programme und/oder Daten in seinen Sendeplan aufnimmt und der Benutzer von der Zentraleinheit den entsprechenden Schlüssel übermittelt erhält.

In einer weiteren Ausführungsvariante werden in der Empfangsvorrichtung Verrechnungsbelege, welche Informationen entsprechend den Kosten für den Zugriff auf die zugriffskontrollierten Programme und/oder Daten und/oder eine Anbieteridentifizierung des Anbieters dieser zugriffskontrollierten Programme und/oder Daten umfassen, generiert und in einem Datenspeicher der Empfangsvorrichtung für den Benutzer abrufbar gespeichert. Einer der Vorteile dieser Ausführungsvariante ist, dass der Benutzer in der Empfangsvorrichtung oder, falls er die Verrechnungsbelege über eine Schnittstelle auf eine externe Recheneinheit übermittelt, in dieser Recheneinheit z.B. die Gebühren für seine Zugriffe etc. selbständig und individuell verwalten kann. Ein anderer Vorteil der Generierung und Speicherung von Verrechnungsbelegen besteht darin, dass dadurch eine nachträgliche Buchführung und Verrechnung der Kosten für den Zugriff auf die zugriffskontrollierten Programme und/oder Daten ermöglicht wird.

In einer Ausführungsvariante werden die genannten Informationen und/oder Verrechnungsbelege in einem Datenspeicher gespeichert, der in einer Chipkarte integriert ist, die aus der Empfangsvorrichtung entfernbar ist. Der Vorteil der Speicherung des Geldbetragswerts und/oder der Verrechnungsbelege in einem aus der Empfangsvorrichtung entfembaren Datenspeicher besteht einerseits darin, dass diese Daten, ohne Zuhilfenahme von zusätzlichen Kommunikationsmitteln in der Empfangsvorrichtung, externen Datenverarbeitungsmitteln ausserhalb der Empfangsvorrichtung verfügbar gemacht werden können, und andererseits darin, dass mehrere Benutzer dieselbe Empfangsvorrichtung benutzerspezifisch benutzen können, indem sie ihren eigenen Datenspeicher in die Empfangsvorrichtung einfügen, oder dass ein Benutzer verschiedene Datenträger für unterschiedliche Zwecke, beispielsweise private und geschäftliche Verwendung oder für verschiedene Themen, in die Empfangsvorrichtung einfügen kann.

In einer weiteren Ausführungsvariante umfassen die Programme digitale Audio- und/oder Videoprogramme. Diese Ausführungsvariante hat die gleichen Vorteile wie die Ausführungsvarianten weiter oben.

In einer Ausführungsvariante umfasst die Empfangsvorrichtung ein Mobilfunkgerät, das über ein Mobilfunknetz mit der Zentraleinheit kommuniziert. In dieser Ausführungsvariante ist das Mobilfunkgerät mit Broadcastempfänger z.B. mit einem VRD (Virtual Retinal Display) ausgerüstet. Einer der Vorteile dieser Ausführungsvariante ist, dass der Benutzer sich frei bewegen kann und standortunabhängig Zugriff auf Broadcastsender erhält.

In einer Ausführungsvariante wird ein Geldbetragswert in einem Datenspeicher der Empfangsvorrichtung gespeichert, werden in der Empfangsvorrichtung basierend auf den Kostendaten der empfangenen Zugriffsbedingungsdaten Kosten für den Zugriff auf die zugriffskontrollierten Programme und/oder Daten bestimmt, wird die Entschlüsselung der zugriffskontrollierten Programme und/oder Daten in der Empfangsvorrichtung verhindert, wenn die bestimmten Kosten grösser als der gespeicherte Geldbetragswert sind und werden die Kosten für den Zugriff auf die unverschlüsselten zugriffskontrollierten Programme und/oder Daten vom gespeicherten Geldbetragswert subtrahiert werden. Diese Ausführungsvariante hat u.a. den Vorteil, dass der Benutzer nicht mit Kosten überrascht wird, über welche er sich im voraus zu wenig im klaren war. Die Ausführungsvariante eignet sich auch z.B. für Eltern, welche ihren Kindern den Bezug von zugriffskontrollierten Programmen und/oder Daten nur bis zu einem Grenzbetrag erlauben wollen.

In einer Ausführungsvariante ist der genannte Datenspeicher zur Speicherung des Geldbetragwertes eine entfernbare, wiederaufladbare Chipkarte. Einer der Vorteile dieser Ausführungsvariante besteht darin, dass der Geldbetragswert durch ein Datenterminal mit einem Nachladebetrag nach- oder aufgeladen werden kann. Der Nachladebetrag entspricht beispielsweise einem vom Benutzer festgesetzten vorausbezahlten Geldbetrag, der dem Benutzer beispielsweise auf einem Bankkonto oder auf einem Kreditkartenkonto (Kreditkartennummer) belastet wird, oder der durch den Benutzer beim Datenterminal bar bezahlt wird (z.B. Prepaid-Karten). Der Vorteil dieser Ausführungsvariante besteht darin, dass sie auf der Grundlage von zahlreichen bereits vorhandenen vernetzten Datenterminals, beispielsweise Bankautomaten oder Billettautomaten, realisiert werden kann.

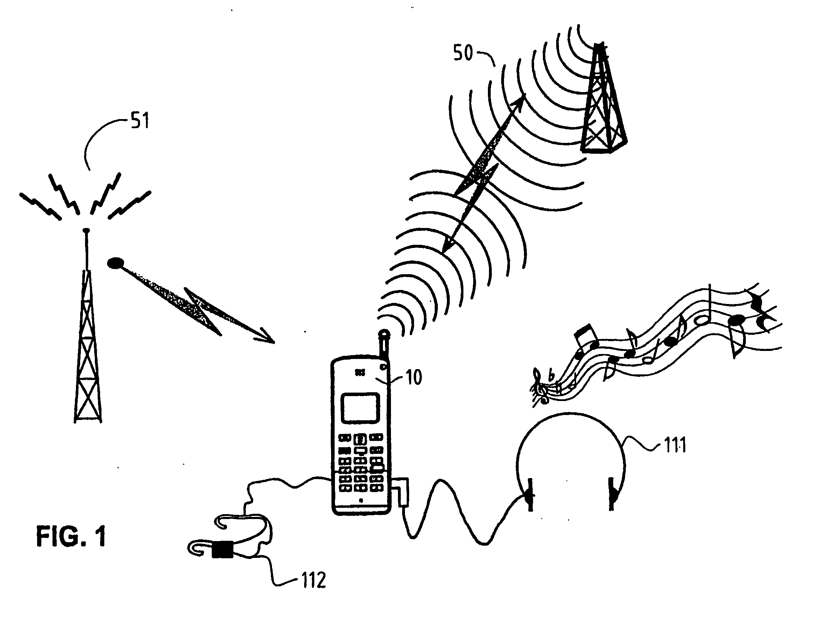

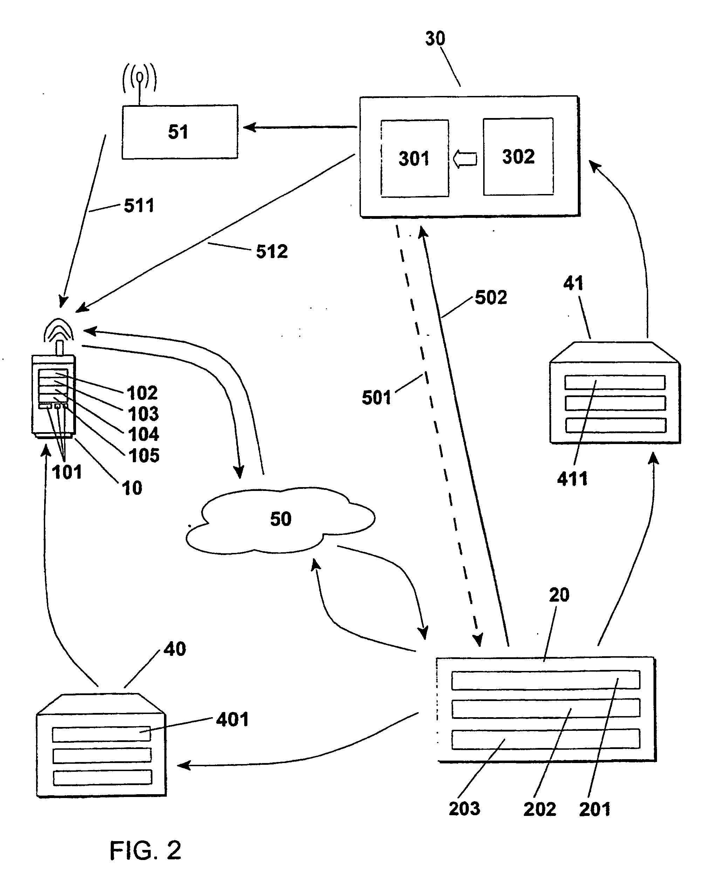

Nachfolgend wird eine Ausführung der vorliegenden Erfindung anhand eines Beispiels beschrieben. Das Beispiel der Ausführung wird durch die beiden beigelegten Figuren 1 und 2 illustriert, die ein schematisches Blockdiagramm eines Kommunikationssystems zeigen, in welchem ein Broadcast-sender, eine Empfangsvorrichtung sowie eine Zentraleinheit mit Clearingmodul illustriert werden, wobei die Figur 1 nur die Empfangsvorrichtung mit Broadcastkanal und Kommunikationskanal zur Zentraleinheit zeigt.

In den Figuren 1 und 2 verbreitet ein Broadcastsender 30 Programme und/oder Daten unidirektional an Empfangsvorrichtungen 10, beispielsweise mittels Radiowellen von einer terrestrischen oder satellitenbasierten Broadcastsendeantenne 51 über eine Luftschnittstelle 511, oder über Broadcastkabelnetze 512. Mit der Referenznummer 30 werden auch die Anbieter dieser Programme und/oder Daten bezeichnet. Der Anbieter kann ebenfalls die verschiedenen Aspekte in ihrer gängigen Unterscheidung umfassen, wie den Broadcast Content Provider (für das Sendeprogramm verantwortlich), den Broadcast Service Provider (Packaging etc.) und den Broadcast Network Provider (Broadcasting, verantwortlich für den Conditional Access etc.). Mit den Programmen und/oder Daten sind beispielsweise digitale Audio-, respektive Video-Programme (Fernsehprogramme), und digitale Daten, beispielsweise Daten für die Ausführung von Datendiensten oder programmbegleitende Daten mit Bezug zu den betreffenden Programmen (Program Associated Data, PAD) oder auch Daten im allgemeinen (Non Program Associated Data, NPAD) gemeint. Insbesondere sind damit auch Multimediadaten, z.B. im MPEGx (insbesondere MP2/MPEG7) Standard, wie sie durch die Moving Picture Experts Group definiert werden, gemeint. Zur besseren Klarheit soll hier angefügt werden, dass auch mehrere verschiedene Anbieter ihre Programme und/oder Daten über einen gemeinsamen Broadcastsender 30 verbreiten können. Eine Empfangsvorrichtung 10 ist mit einem Broadcastempfänger 103 ausgestattet, mittels welchem die vom Broadcastsender 30 verbreiteten Programme und/oder Daten über Broadcastkanäle empfangen werden können, beispielsweise über das Broadcastkabelnetz 512 oder mittels einer Empfangsantenne als Radiowellen über die Luftschnittstelle 511.

Broadcastsysteme mit solchen Broadcastsendern und Broadcastempfängern sind beispielsweise unter der Bezeichnung Digital Audio Broadcasting (DAB), respektive Digital Video Broadcasting (DVB) bekannt. Vom European Telecommunications Standards Institute (ETSI), F-06921 Sophia Antipolis Cedex, France, wurde für das Digital Audio Broadcasting (DAB) System, das für die Übermittlung von hochqualitativen digitalen Audio-Programmen und/oder Datendiensten für den Empfang mittels mobilen, tragbaren und festinstallierten Endgeräten von terrestrischen oder satellitenbasierten Sendern 30 oder von Broadcastkabelnetzen 512 entwickelt wurde, der Standard ETS 300 401, "Radio broadcasting systems; Digital Audio Broadcasting (DAB) to mobile, portable and fixed receivers", definiert. Der Inhalt des diesbezüglichen Dokuments ETS 300 401, das im Mai 1997 vom ETSI in der zweiten Ausgabe veröffentlicht wurde, sowie der Inhalt des Standarddokuments ETS 300 174, "Network Aspects (NA); Digital coding of component television signals for contribution quality applications in the range 34-45 Mbit/s", das im November 1992 vom ETSI veröffentlicht wurde, werden hiermit per Referenz in diesen Text aufgenommen. In den oben genannten ETSI-Standards wird auch ein Fast information Channel (FIC) definiert, mittels welchem einem Broadcastempfänger 103 ein schneller Zugriff auf Informationen ermöglicht wird. Über den FIC-Kanal werden beispielsweise Multiplex Configuration Information (MCI) aber auch Dienstinformationen und Daten für Datendienste übertragen.

Um den Zugriff auf einzelne oder mehrere Dienste oder Dienstkomponenten (im Zusammenhang mit DAB sind diese Dienste und Dienstkomponenten Audio-Programme und/oder Daten(-dienste), im Zusammenhang mit DVB Video-, respektive Fernsehprogrammen, und/oder Daten(-dienste)) für berechtigte Benutzer zu begrenzen, werden in den oben genannten ETSI-Standards Mechanismen für zugriffskontrollierte Programme und/oder Daten(-dienste), der sogenannte Conditional Access, definiert. Insbesondere werden in den oben genannten ETSI-Standards Scrambling/Descrambling-Prozeduren (Verschlüsselung/Entschlüsselung), Parameter für die Signalisierung und Synchronisation des Conditional Access sowie Mechanismen für die Kontrolle und Verteilung von Berechtigungen (Berechtigungsdaten für Benutzer) durch die Übermittlung von sogenannten ECM-Meldungen (Entitlement Checking Messages) und EMM-Meldungen (Entitlement Management Messages) über die Broadcastkanäle (Broadcastkabelnetz 512 oder Luftschnittstelle 511) beschrieben. Gemäss den oben genannten ETSI-Standards wird für jede der über Broadcastkanäle 511/512 ausgesandten Dienstkomponenten ein Conditional Access Flag und/oder ein Conditional Access Identifier benützt, um dem Broadcastempfänger 103 anzuzeigen, ob die betreffende Dienstkomponente Conditional Access Mechanismen verwendet oder nicht, und gegebenenfalls, welche Art von Mechanismen verwendet wird. Für Dienstkomponenten, die in einem Controlled Access Modus sind und die in diesem Text als zugriffskontrollierte Programme und/oder Daten bezeichnet werden, werden die Daten der betreffenden Dienstkomponente (die Programme und/oder Daten betreffen kann) mit einem Control Word verschlüsselt, wobei dieses Control Word regelmässig geändert und seinerseits durch einen Session Key (Schlüssel) verschlüsselt in den ECM-Meldungen an die Broadcastempfänger 103 übertragen wird. Durch den Conditional Access Identifier wird gemäss den oben genannten ETSI-Standards das für alle Dienstkomponenten eines Dienstes verwendete Zugriffskontrollmodul 105, das sogenannte Access Control System, identifiziert, welches Access Control System die vom Broadcastsender 30 übermittelten ECM- und EMM-Meldungen interpretieren und verarbeiten kann.

Der für die Verschlüsselung der Control Words verwendete Session Key (Schlüssel) ist gemäss den oben genannten ETSI-Standards im Access Control System als geheime Information gespeichert. Session Keys (Schlüssel) können in EMM-Meldungen an Broadcastempfänger 103 übertragen werden, wobei sie für die Übertragung ihrerseits durch einen Distribution Key verschlüsselt sind. Gemäss den oben genannten ETSI-Standards werden in den EMM-Meldungen Berechtigungen (Berechtigungsdaten) an Broadcastempfänger 103 übertragen, wobei verschiedene Arten von Berechtigungen definiert sind, die verschiedenen Abonnementsarten entsprechen: Abonnemente für ein Thema, eine Stufe oder eine Klasse, Vorbuchung mit Bezahlung pro Programm, oder spontane Bezahlung pro Programm, pro Dienst oder pro Zeit. Gemäss den oben genannten ETSI-Standards können die EMM-Meldungen an einen spezifischen, durch eine eindeutige Kundenadresse identifizierten Kunden (Benutzer), an eine kleine, durch eine Gruppenadresse identifizierte Gruppe von Kunden (Benutzern), an eine grosse, durch eine Kollektivadresse identifizierte Gruppe von Kunden (Benutzern) oder an sämtliche Kunden übermittelt werden. Da der Inhalt der EMM-Meldungen, insbesondere die Berechtigungen, nicht in Echtzeit an die Broadcastempfänger 103 übermittelt werden muss, kann dieser anstatt mittels EMM-Meldungen auch auf anderem Weg, beispielsweise gespeichert auf einem Datenträger, insbesondere eine Chipkarte, an den Broadcastempfänger 103 übertragen werden. Gemäss den oben genannten ETSI-Standards sind die Kundenadressen im Access Control System (Zugriffskontrollmodul 105) gespeichert und werden vom Access Control System an das für den Empfang von EMM-Meldungen zuständige EMM-Empfangsmodul (nicht dargestellt) des Broadcastempfängers 103 übertragen, so dass dieses EMM-Empfangsmodul nur solche EMM-Meldungen an das Access Control System weiterleitet, die eine Kundenadresse enthalten, die mit einer der vom Access Control System erhaltenen Kundenadressen übereinstimmen. Um das Access Control System nicht unnötig mit Meldungen zu überlasten, umfasst der Broadcastempfänger 103 Hard- oder Softwarefilter, die nur diejenigen Meldungen an das Access Control System weiterleiten, die durch das Access Control System interpretiert und verarbeitet werden können und müssen, beispielsweise werden die Meldungen wie obenstehend erwähnt auf Grund der Kundenadresse gefiltert und es werden wiederholt übertragene Meldungen gefiltert.

Gemäss den oben genannten ETSI-Standards werden in den ECM-Meldungen neben geheimen Codes für die Entschlüsselung (descrambling) die Bedingungen (Zugriffsbedingungsdaten) an die Broadcastempfänger 103 übertragen, die zu erfüllen sind, um Zugriff auf Conditional Access Dienste zu erhalten. Die ECM-Meldungen enthalten sämtliche Informationen, die die Bedingungen für den Zugriff auf einen Dienst, beispielsweise ein Audio-Programm oder einen Datendienst spezifizieren. Es können folglich Kunden mit unterschiedlichen Berechtigungen auf einen Dienst zugreifen. Gemäss den oben genannten ETSI-Standards können, je nach verfügbarem Dienstzugriff, folgende Parameter in den ECM-Meldungen enthalten sein: (1) Program Provider Identifier, identifiziert den Anbieter, der die ECM-Meldung generiert hat. (2) Broadcast Datum und Programm Thema/Stufe, wenn das Programm, das heisst der Dienst, im Abonnement für ein(e) Thema/Stufe verfügbar ist. (3) Broadcast Datum und Programm Klasse, wenn das Programm, das heisst der Dienst, im Abonnement per Link verfügbar ist. (4) Programmnummer, wenn das Programm, das heisst der Dienst, unter Vorbuchung und Zahlung pro Programm verfügbar ist. (5) Programmnummer und Programmkosten, wenn das Programm, das heisst der Dienst, für spontane Bezahlung pro Programm verfügbar ist. (6) Programmnummer und Kosten pro Zeiteinheit des Programms, wenn das Programm, das heisst der Dienst, für spontane Bezahlung pro Zeiteinheit pro Programm verfügbar ist. Wenn die Berechtigungen den Bedingungen genügen, die zu erfüllen sind um Zugriff auf Conditional Access Dienste zu erhalten, kann der Session Key (Schlüssel) des Access Control Systems verwendet werden, um das Control Word zu entschlüsseln. Mit dem Control Word können dann die Daten der betreffenden Dienstkomponenten entschlüsselt werden.

In der vorliegenden Erfindung werden für den Zugriff auf zugriffskontrollierte Programme und/oder Daten durch einen Benutzer der Empfangsvorrichtung 10 die verschlüsselt verbreiteten, zugriffskontrollierten Programme und/oder Daten in der Empfangsvorrichtung 10 entschlüsselt, wenn über den Broadcastkanal 511/512 empfangene Zugriffsbedingungsdaten der zugriffskontrollierten Programme und/oder Daten mit Berechtigungsdaten des Benutzers übereinstimmen. Wie oben angeführt wurde, können in den ECM-Meldungen vom Broadcastsender 30 auch Kostendaten an Broadcastempfänger 10 übermittelt werden, nämlich Programmkosten für zugriffskontrollierte Programme und/oder Daten, die für die spontane Bezahlung pro Dienst verfügbar sind, und/oder Kosten pro Zeiteinheit oder Berechnungseinheit für zugriffskontrollierte Programme und/oder Daten, die für die spontane Bezahlung pro Zeiteinheit oder Berechnungseinheit und pro Dienst verfügbar sind. Eine Berechnungseinheit kann z.B. eine Zeiteinheit, eine logische Einheit, wie z.B. ein ganzer Videofilm oder ein ganzes Musikstück etc., oder eine übertragene Datenmenge sein. Die empfangenen Zugriffsbedingungsdaten können aber ausser Kosten auch beliebige andere Zugriffsbedingungen für den Zugriff auf die zugriffskontrollierten Programme und/oder Daten umfassen. So können sie auch Weiterverwendungsbedingungen für Benutzerdaten umfassen, welche Benutzerdaten weiter unten genauer beschrieben werden. Z.B. kann eine Weiterverwendungsbedingung von Benutzerdaten so lauten, dass falls der Benutzer seine Benutzerdaten, oder Teile seiner Benutzerdaten vom Broadcastanbieter verwenden lässt, er weniger hohe Kosten für den Zugriff auf die zugriffskontrollierten Programme und/oder Daten bezahlen muss, oder er sogar Gutschriften für den Zugriff (z.B. auf einen Werbekanal) erhält. Benutzerdaten können beispielsweise eine eindeutige Identifizierung des Benutzers, persönliche Daten oder sein Zugriffsverhalten auf zugriffskontrollierte Programme und/oder Daten umfassen. Die unverschlüsselten Programme, respektive Daten, d.h. insbesondere die Zugriffsbedingungsdaten, können beispielsweise über ein Verarbeitungsmodul der Empfangsvorrichtung und von dort über elektroakustische Wandler, respektive Anzeigeeinheiten, dem Benutzer der Empfangsvorrichtung 10 wiedergegeben werden. Vor der kostenpflichtigen Wiedergabe an den Benutzer wird durch die Empfangsvorrichtung 10, beispielsweise durch ein entsprechendes Softwaremodul, vom Benutzer optional (beispielsweise eine vom Benutzer konfigurierbare Option) über die Anzeigeeinheit 111/112 eine entsprechende Bestätigung angefordert, wie erwähnt beispielsweise unter Angabe der Kosten für den Zugriff auf die betreffenden zugriffskontrollierten Programme und/oder Daten und/oder Weiterverwendungsbedingungen von Benutzerdaten, und die Bestätigung durch den Benutzer über die Eingabeelemente 101 eingegeben. Die Eingabeelemente 101 können z.B. Tastaturen, graphische Eingabemittel (Maus, Trackball, Eyetracker bei Virtual Retinal Display (VRD) etc.), aber auch IVR (Interactive Voice Response) etc. umfassen.

Gemäss der vorliegenden Erfindung ist die Empfangsvorrichtung 10 mit einer Zentraleinheit 20 über ein Netz 50 bidirektional verbunden. Die Verbindung zwischen der Zentraleinheit 20 und der Empfangsvorrichtung 10 umfasst ebenfalls einen geschützten Kanal (Security Channel) bzw. die für den Schutz notwendigen Sicherheitsmechanismen (Verschlüsselung, limitiertes Zeitfenster, elektronische Signaturen etc.) in der Zentraleinheit 20 und der Empfangsvorrichtung 10. Die Downloadmechanismen zur Empfangsvorrichtung 10 können ebenfalls DAB/MExEApplets umfassen. Die Empfangsvorrichtung 10 kann insbesondere ein mit einem Broadcastempfänger 103 ausgerüstetes Mobilfunkgerät sein, das über ein Mobilfunknetz, zum Beispiel ein GSM-, GPRS, UMTS-Netz oder ein anderes, beispielsweise satellitenbasiertes Mobilfunknetz, oder ein Festnetz, zum Beispiel ein ISDN-Netz, das öffentliche geschaltete Telefonnetz, oder ein IP-Netz (insbesondere das Internet) mit der Zentraleinheit 20 verbunden ist. Um Berechtigungsdaten für einen bestimmten Zugriff auf zugriffskontrollierte Programme und/oder Daten zu erhalten, werden Zugriffsrequestdaten von der Empfangsvorrichtung 10 an die Zentraleinheit 20 übermittelt. Der Benutzer hat die Möglichkeit mindestens einen Teil der Zugriffsrequestdaten anhand der empfangenen Zugriffsbedingungsdaten selber zu bestimmen. Dies kann z.B. dadurch geschehen, dass der Benutzer durch die Empfangsvorrichtung aufgefordert wird, sein Einverständnis mit den Zugriffsbedingungen oder mit einem Teil der Zugriffsbedingungen über ein Interface zu geben. Die vom Benutzer definierbaren Zugriffsrequestdaten lassen sich beispielsweise über Eingabeelemente 101 der Empfangsvorrichtung 10 vom Benutzer bestimmen. In der Zentraleinheit werden die Zugriffsrequestdaten überprüft und die Zentraleinheit 20 übermittelt mindestens Teile der Berechtigungsdaten entsprechend den übermittelten Zugriffsrequestdaten an die Empfangsvorrichtung 10. Zusammen mit den Berechtigungsdaten kann auch ein Schlüssel zur Entschlüsselung der zugriffskontrollierten Programme und/oder Daten von der Zentraleinheit 20 gemäss den empfangenen Zugriffsrequestdaten an die Empfangsvorrichtung 10 übermittelt werden. Z.B. kann die Zentraleinheit 20 ein Datatoken generieren und an die Empfangsvorrichtung 10 übermitteln, wobei ein Datatoken jeweils Daten zu einem entsprechenden Schlüssel zu den zugriffskontrollierten verschlüsselten Programmen und/oder Daten oder eine Zugriffserlaubnis auf einen Schlüssel zum Entschlüsseln von zugriffskontrollierten Programmen und/oder Daten umfasst. Ebenso werden Clearingdaten von der Empfangsvorrichtung 10 an die Zentraleinheit 20 übermittelt. Die Clearingdaten können mindestens teilweise vor, nach oder periodisch während des Zugriffs auf die zugriffskontrollierten Programme und/oder Daten von der Empfangsvorrichtung 10 an die Zentraleinheit 20 übermittelt werden. Es ist auch vorstellbar, dass die Zugriffsrequestdaten die Clearingdaten umfassen. Die Clearingdaten werden von der Zentraleinheit 20 an ein Clearingmodul 201 der Zentraleinheit übermittelt. Die Clearingdaten umfassen Verrechnungsdaten für den genannten Zugriff auf die unverschlüsselten zugriffskontrollierten Programme und/oder Daten sowie Benutzerdaten. Die Benutzerdaten umfassen Informationen gemäss des Zugriffes, wie z.B. eine eindeutige Benutzeridentifizierung, Art und/oder Dauer des Zugriffs auf die zugriffskontrollierten Daten etc. Die Benutzerdaten können auch Angaben über die betreffenden zugriffskontrollierten Programme und/oder Daten enthalten, beispielsweise eine Programmnummer, Angaben über das Programmthema, die Programmstufe und/oder die Programmklasse und/oder eine Währungsangabe. Im Zusammenhang mit der Währungsangabe soll zudem erwähnt werden, dass nicht nur verschiedene Währungen für die Geldbetragswerte unterstützt werden können, sondern dass für die Geldbetragswerte auch Punkte gemäss einem definierten Punktesystem, beispielsweise ein Loyalitätspunktesystem, verwendet und unterstützt werden können, wobei diese Punkte wie eine Währung behandelt werden. Die Benutzerdaten enthalten zudem eine Anbieteridentifizierung des Anbieters und/oder des Broadcastsenders der betreffenden zugriffskontrollierten Programme und/oder Daten. Die Benutzeridentifizierung des Benutzers der Empfangsvorrichtung 10 kann wie gesagt in den Benutzerdaten enthalten sein, welche Benutzeridentifizierung beispielsweise der oben erwähnten eindeutigen Kundenadresse entspricht oder welche Benutzeridentifizierung einer anderen Benutzeridentifizierung für andere Systeme entspricht, beispielsweise eine International Mobile Subscriber Identity (IMSI) oder eine MSISDN (Mobile Subscriber ISDN), die zur Identifizierung in einem Mobilfunknetz dient, und welche Benutzeridentifizierung beispielsweise in der Chipkarte, beispielsweise eine SIM-Karte (Subscriber Identification Module), gespeichert ist Entsprechend den empfangenen Clearingdaten werden dem Anbieter der zugriffskontrollierten Programme und/oder Daten sowie dem Benutzer durch die Zentraleinheit 20 Leistungen gutgeschrieben und/oder belastet und/oder dem Anbieter Informationen bezüglich der Benutzerdaten zur Verfügung gestellt, welche Informationen durch die Zentraleinheit 20 gemäss festgelegten Weiterverwendungsbedingungen generiert werden. Die Clearingdaten sind beispielsweise elektronisch signiert und in einem Stack in der Empfangsvorrichtung 10 gespeichert. Die elektronische Signatur authentifiziert beispielsweise das Hardware- oder Softwaremodul, welches die Clearingdaten generiert, und/oder die Empfangsvorrichtung 10 und/oder den betreffenden Benutzer der Empfangsvorrichtung 10 und/oder das Kommunikationsmodul 104 als authentische(n) Produzent/Quelle der Clearingdaten. Die elektronische Signatur basiert beispielsweise auf einem Zertifikat, das durch eine Zertifizierungseinheit, beispielsweise eine Trusted Third Party (TTP), ausgegeben wird.

Die Verbindung zwischen Empfangsvorrichtung 10 und Zentraleinheit 20 kann über verschiedene Datenkanäle, und nicht nur direkt über die beschriebenen Kommunikationsnetze 50 erfolgen. Die Daten können zwischen der Empfangsvorrichtung und der Zentraleinheit, z.B. auch über eine Schnittstelle (z.B. eine drahtlose Schnittstelle wie eine Infrarotschnittstelle oder Bluetooth) an ein Datenterminal, und vom Datenterminal über ein Kommunikationsnetz, oder mittels einer in ein Datenterminal eingeführten entfembaren Chipkarte der Empfangsvorrichtung über dieses Datenterminal und ein Kommunikationsnetz an die Zentraleinheit übertragen werden. In der bevorzugten Ausführungsvariante umfassen jedoch die Empfangsvorrichtung 10 und die Zentraleinheit 20 jeweils ein Kommunikationsmodul 104/202. Mittels der Kommunikationsmodule können Daten über das Kommunikationsnetz 50 ausgetauscht werden. Das Kommunikationsnetz 50 umfasst, wie bereits erwähnt, beispielsweise ein Mobilfunknetz, zum Beispiel ein GSM-, GPRS oder UMTS-Netz oder ein anderes, beispielsweise satellitenbasiertes Mobilfunknetz, oder ein Festnetz, zum Beispiel ein ISDN-Netz, das öffentliche geschaltete Telefonnetz, ein TV- oder Radio-Kabelnetz, oder ein IP-Netz (Internet Protocol). Insbesondere in Empfangsvorrichtungen 10, die als mobile Vorrichtungen ausgestaltet sind, umfasst das Kommunikationsmodul 104 ein Mobilfunkmodul für die Kommunikation Ober das Mobilfunknetz 50. Mittels des Kommunikationsmoduls 104 können insbesondere die oben erwähnten Clearingdaten, beispielsweise periodisch (z.B. mit GSM/SMS, GSM/USSD, GPRS oder UMTS) oder jeweils beim Erreichen eines definierten Werts eines Geldbetragswerts oder eines definierten Zeitfensters, an die Zentraleinheit übermittelt werden. Bei Erreichen des vordefinierten Wertes kann beispielsweise auch die Solvenz des betreffenden Benutzers von der Zentraleinheit 20 bei einem Finanzinstitut 40 überprüft werden. Der vordefinierte Wert des Geldbetragswertes kann z.B. in einem Datenspeicher der Empfangsvorrichtung 10 gespeichert sein. Die Gutschrift bzw. die Belastung kann vor oder nach (prepaid/postpaid) dem Erreichen des Geldbetragswertes erfolgen. In der letzteren Variante entspricht also der gespeicherte Geldbetragswert einer Kreditlimite, die je nach Option z.B. von der Zentraleinheit 20 bzw. dem Clearingmodul 201 gesetzt wird. Die Berechnung der Kosten und deren Vergleich mit einem vordefinierten Geldbetragswert wird von einem Kostenerfassungsmodul der Empfangsvorrichtung ausgeführt. Dies berechnet basierend auf den Kostendaten der empfangenen Zugriffsbedingungsdaten die Kosten für den Zugriff auf die zugriffskontrollierten Programme und/oder Daten. Das Kostenerfassungsmodul ist beispielsweise ein programmiertes Softwaremodul, das auf einem Prozessor der Empfangsvorrichtung 10 oder einer Chipkarte ausgeführt wird, oder ein hardwaremässig realisiertes Modul. Bei der Ausführungsvariante mit der Chipkarte kann die Chipkarte z.B. eine multifunktionale SIM-Karte unter Berücksichtigung der MexE-Spezifikationen (Mobile Station Application Execution Environment) sein.

Die Verrechnungsdaten der Clearingdaten können Verrechnungsbelege (z.B. elektronisch signiert) umfassen, ähnlich wie CDR-Belege (Call Data Records) als sogenannte DUR-Belege (DAB/DVB Usage Records), welche Ober die Zentraleinheit 20 an das Clearingmodul 201 übermittelt werden. Es soll ebenso erwähnt werden, dass das Clearingmodul 201 nicht unbedingt in die Zentraleinheit 20 integriert sein muss, sondern als eigenständige Einheit über ein Kommunikationsnetz mit der Zentraleinheit eingebunden sein kann. Umfassen die Clearingdaten Verrechnungsdaten mit Verrechnungsparametern zur Belastung oder Gutschrift von Geldbetragswerten an den Benutzer und/oder den Anbieter gemäss den bezogenen zugriffskontrollierten Programmen und/oder Daten, werden die Kosten für den Zugriff von der Zentraleinheit 20 errechnet und das Clearing der Geldbetragswerte über die Geldinstitute 40/41 den entsprechenden Konten 401/411 gutgeschrieben (beim Benutzer ist also auch z.B. Sponsoring möglich) oder belastet. Dies kann ebenfalls vor, nach oder in bestimmten Abständen (z.B. periodisch) während des Zugriffs des Benutzers auf die zugriffskontrollierten Daten geschehen. Die Belastung und/oder Gutschrift bei der Verrechnung des genannten Zugriffs durch die Zentraleinheit 20 kann auch den Geldbetragswert 0 aufweisen. Der Benutzer kann aber auch Geldbetragswerte oder andere Leistungen gutgeschrieben erhalten, z.B. durch das Betrachten eines ausgestrahlten Werbeblocks.

Die Benutzerdaten werden von der Zentraleinheit 20 entsprechend den Weiterverwendungsbedingungen gefiltert und/oder statistisch ausgewertet und dann dem Anbieter zur Verfügung gestellt. Wie erwähnt können die Weiterverwendungsbedingungen vom Benutzer definierbar sein, oder anderen Vereinbarungen (z.B. vorgängig gemachten oder gesetzlichen Richtlinien) entsprechen. Zusätzlich zu den Benutzerdaten können die Clearingdaten Daten umfassen, welche sich vom Benutzer vor der Übermittlung der Clearingdaten bestimmen lassen. Diese Daten können vom Benutzer z.B. über die Eingabeelemente 101 der Empfangsvorrichtung 10 eingegeben werden. Damit ist es möglich, dass der Benutzer z.B. nach dem Zugriff auf einen Videofilm oder eine spezielle Sendung Anregungen, Kritik etc. zu diesem Film an die Zentraleinheit 20 über diese vom Benutzer festlegbaren Daten machen kann. Auch diese Daten werden von der Zentraleinheit 20 gefiltert und/oder statistisch ausgewertet und dem Anbieter zur Verfügung gestellt. Ein solches Feedback kann z.B. dann von Seiten des Anbieters durch Gutschriften von Geldbetragswerten oder anderen Leistungen (z.B. gratis Access zu speziellen Daten) honoriert werden. Mit anderen Worten, da sowohl die Verbindung der Zentraleinheit 20 zur Empfangsvorrichtung 10, als auch die Verbindung zwischen der Zentraleinheit 20 und dem Anbieter 30 einen Rückkanal besitzen, kann die Zentraleinheit als zentrale Verwaltungs- und Kommunikationsdrehscheibe für Anbieter und Benutzer dienen, wobei der gewünschte Datenschutz oder die gewünschte Anonymität des Benutzers durch die Weiterverwendungsbedingungen gewährleistet werden kann. Dies hat viele Vorteile und eröffnet neue Möglichkeiten für die Nutzung von Broadcastsendern. Beispielsweise ist es dadurch auch möglich, verschiedenste Spiele, wie z.B. Glücksspiele, Lotterien etc. mit Hilfe eines Broadcastkanals zu spielen oder initiieren zu lassen.

Als Ausführungsvariante kann die Empfangsvorrichtung 10 eine oder mehrere Schnittstellen umfassen, insbesondere eine Geräteschnittstelle, zum Beispiel eine kontaktlose Schnittstelle, beispielsweise eine Infrarotschnittstelle, zum Beispiel eine High Speed Infrared (HSIR)-Schnittstelle oder eine IrDA-Schnittstelle (Infrared Data Association), eine induktive Schnittstelle, zum Beispiel eine Radio Frequency Identification (RFID)-Schnittstelle, eine Home RF (Radio Frequency)-Schnittstelle, eine Digital European Cordless Telecommunications (DECT)-Schnittstelle oder eine andere Cordless Telecommunications System (CTS)-Schnittstelle, oder eine hochfrequente Funkschnittstelle, zum Beispiel eine sogenannte "Bluetooth-Schnittstelle". Über eine solche Schnittstelle kann die Empfangsvorrichtung 10 Daten mit externen Datenterminals ausserhalb der Empfangsvorrichtung 10 austauschen, die über eine entsprechende Schnittstelle verfügen. Insbesondere können die oben erwähnten Zugriffsrequestdaten und/oder Benutzerdaten und/oder Clearingdaten über die Schnittstelle an das Datenterminal übertragen und durch das Datenterminal über ein Kommunikationsnetz 50 an die Zentraleinheit 20 geleitet werden. Zudem kann über die Schnittstelle zum Beispiel auch die Bestätigung für den Empfang der Daten, beispielsweise direkt von der Zentraleinheit 20 entgegengenommen werden.

Es ist als Ausführungsvariante vorstellbar, dass die Zugriffsrequestdaten und/oder die Berechtigungsdaten und/oder die Clearingdaten auf eine entfernbare Chipkarte oder anderes Speichermedium der Empfangsvorrichtung gespeichert werden. Damit können die Verrechnungsbelege durch ein externes Datenterminal ausserhalb der Empfangsvorrichtung 10 gelesen werden, indem die Chipkarte in die Kartenlese-/Schreibvorrichtung des Datenterminals eingeführt wird. Die Daten können dann durch das Datenterminal über ein Kommunikationsnetz 50 an die Zentraleinheit 20 geleitet werden. Ebenso liesse sich auf der Chipkarte die Bestätigung für den Empfang der Daten übertragen. Das Datenterminal ist vorzugsweise ein öffentlich zugängliches Datenterminal, beispielsweise ein Bankautomat, ein Billettautomat oder eine Kassenvorrichtung.

Die Zentraleinheit überprüft die über das Kommunikationsnetz empfangenen Clearingdaten auf die Authentizität des Absenders, respektive des Produzenten oder der Quelle der Clearingdaten, beispielsweise die Authentizität des Kommunikationsmoduls 104 (z.B. bei GSM/UMTS Ober die MSISDN oder IMSI) und/oder das Hard- oder Softwaremodul der Empfangsvorrichtung, welches die Clearingdaten generiert hat, z.B. anhand einer elektronischen Signatur der Clearingdaten. Für authentische Clearingdaten werden basierend auf den darin enthaltenen Verrechnungsdaten Geldbetragswerte an den (die) betreffenden, durch den (die) in den Verrechnungsdaten enthaltenen Anbieteridentifizierung(en) identifizierte(n) Anbieter gutgeschrieben und/oder belastet. Dem Anbieter werden dann, wie beschrieben, durch die Zentraleinheit 20 Ober das Kommunikationsnetz 50 Informationen betreffend die eingegangenen Verrechnungsbelege und/oder statistische Informationen betreffend den Zugriff auf zugriffskontrollierte Programme und/oder Daten und/oder weitere Benutzerdaten, falls in den Weiterverwendungsbedingungen vereinbart, übermittelt. Falls in der Zentraleinheit 20 festgestellt wird, dass durch die Zentraleinheit 20 ausgegebene, respektive verwaltete Geldbetragswerte, innerhalb einer vordefinierten Zeitdauer, beispielsweise ein oder mehrere Jahre, nicht durch über die Kommunikationsnetze 50 entgegengenommene Clearingdaten verrechnet werden, können diese Geldbetragswerte durch die Zentraleinheit basierend auf statistischen Informationen betreffend den Zugriff auf zugriffskontrollierte Programme und/oder Daten an die Anbieter aufgeteilt werden. Die Zentraleinheit 20 umfasst beispielsweise einen oder mehrere Kommunikationsserver sowie eine Datenbank zur Speicherung der ausgegebenen Geldbetragswerte und Nachladebeträge, zur Speicherung der entgegengenommenen Clearingdaten, und zur Speicherung von Informationen betreffend die Anbieter, respektive Betreiber von Broadcastsendern 30.

Es muss erwähnt werden, dass in der vorliegenden Erfindung in einer Ausführungsvariante das Billing, d.h. die ganze Verrechnung gemäss den Verrechnungsdaten, auch mit einem auf einer entfembaren Chipkarte gespeich-erten Nachladebetrag realisiert werden kann. Dies betrifft insbesondere Prepaid- oder Postpaid-Varianten der Verrechnung von zugriffskontrollierten Program-men und/oder Daten, die von Broadcastsendem 30 verbreitet werden. In einer Variante ist der weiter oben genannte, in einem Datenspeicher (z.B. eine solche entfembare Chipkarte etc.) der Empfangsvorrichtung 10 gespeicherte Geldbetragswert eine Kreditlimite, die je nach Option z.B. von der Zentraleinheit 20 bzw. dem Clearingmodul 201 gesetzt wird, z.B. nach überprüfen der Solvenz eines Benutzers. Bei der Variante der Kreditlimite werden die eigentlichen Kosten für den Zugriff auf unverschlüsselte zugriffskontrollierte Programme und/oder Daten erst nach der Übermittlung der Clearingdaten an die Zentraleinheit 20 oder an ein anderes Billing-System dem betreffenden Benutzer, der durch eine in den Clearingdaten enthaltene Benutzeridentifizierung identifiziert ist, belastet oder in Rechnung gestellt. Vorausbezahlte Geldbetragswerte, respektive Nachladebeträge, können beispielsweise in Form von anonymen Prepaid-Karten, die in eine von möglicherweise mehreren Karteneinführstellen der Empfangsvorrichtung 10 eingeführt werden, gegen direkte Bezahlung (bar, Kreditkarte) oder entsprechende Kontobelastung ausgegeben werden. Vorausbezahlte, respektive in Rechnung gestellte Geldbetragswerte, respektive Nachladebeträge, können einem identifizierten Benutzer auch durch Kontobelastung oder Rechnungsstellung, beispielsweise nach erfolgter Solvenzprüfung, wie oben beschrieben in die Empfangsvorrichtung 10 geladen werden. Ein Vorteil von Empfangsvorrichtungen 10, welche mit dem Kommunikationsmodul 104 zur direkten Kommunikation mit einer Zentraleinheit 20 ausgestattet sind, ist, dass die Kostenverrechnung durch Übermittlung der Clearingdaten mittels des Kommunikationsmoduls 104 an ein Billing- oder Clearingmodul 201 erfolgen kann, ohne dass in der Empfangsvorrichtung 10 Geldbetragswerte gespeichert, geprüft oder belastet werden müssen.

Die Ausführungsvariante mit dem in einem Datenspeicher gespeicherten Prepaid- oder Postpaid-Geldbetrag oder dem Geldbetrag als Kreditlimite kann als Ausführungsbeispiel so realisiert werden, dass in einem für Benutzer nicht beschreibbaren Datenspeicher der Empfangsvorrichtung 10 ein Geldbetragswert gespeichert wird, der einem vorausbezahlten Geldbetrag oder einer Kreditlimite entspricht Der Datenspeicher ist beispielsweise fest in der Empfangsvorrichtung 10 installiert oder er befindet sich auf einem Datenträger der Empfangsvorrichtung 10, beispielsweise einer Chipkarte, welcher Datenträger vom Benutzer aus der Empfangsvorrichtung 10 entfernt werden kann. Der Geldbetragswert wird beispielsweise über die Broadcastkanäle 511/512 oder über ein Kommunikationsnetz 50, beispielsweise ein Mobilfunknetz, zum Beispiel ein GSM-, GPRS- oder UMTS-Netz oder ein anderes, beispielsweise satellitenbasiertes Mobilfunknetz, oder ein Festnetz, zum Beispiel ein ISDN-Netz, das öffentliche geschaltete Telefonnetz, oder ein IP-Netz (insbesondere das Internet), in den Datenspeicher geladen. Falls sich der Speicher auf einer Chipkarte befindet, kann der Geldbetragswert mittels einer Kartenlese-/Schreibvorrichtung geladen werden, in die die Chipkarte eingeführt wird.

Das Zugriffskontrollmodul 105 (Access Control System) ist mit einem zusätzlichen Kreditkontrollmodul ausgestattet Das Kreditkontrollmodul verhindert die Entschlüsselung von zutrittskontrollierten Programmen und/oder Daten, wenn die von einem Kostenerfassungsmodul berechneten, zu bezahlenden Kosten grösser sind als der im Datenspeicher gespeicherte Geldbetragswert ist. Die Vergleichsoperation betreffend die berechneten Kosten und den gespeicherten Geldbetragswert kann dabei durch das Kreditkontrollmodul durchgeführt werden oder sie kann zur Entlastung des Zugriffskontrollmoduls 105 ausserhalb des Kreditkontrollmoduls, beispielsweise hardwaremässig, ausgeführt werden, so dass das Kreditkontrollmodul beispielsweise auf die Funktion der Überprüfung des Resultats der Vergleichsoperation reduziert werden kann. Funktionen und Operationen des Zugriffskontrollmoduls 105 können beispielsweise parallel (gleichzeitig) zu den Funktionen und Operationen des Kostenerfassungsmoduls ausgeführt werden. Zum Beispiel kann das Kostenerfassungsmodul auf Grund der in den ECM-Meldungen empfangenen Kostendaten die Kosten für den Zugriff auf die betreffenden zugriffskontrollierten Programme und/oder Daten bestimmen und das Resultat der Vergleichsoperation (beispielsweise "1" für ausreichender Kredit, "0" für kein ausreichender Kredit) in einem für das Zugriffskontrollmodul 105 zugänglichen Speicherplatz abspeichern, während das Zugriffskontrollmodul 105 auf Grund der in den ECM-Meldungen empfangenen Zugriffsbedingungsdaten und den übermittelten oder in der Empfangsvorrichtung 10 gespeicherten Berechtigungsdaten die Berechtigung des Benutzers für den Zugriff auf die betreffenden zugriffskontrollierten Programme und/oder Daten bestimmt und danach, bei gegebener Berechtigung, das durch das Kostenerfassungsmodul bestimmte Resultat der Vergleichsoperation kontrolliert. Falls durch die Vergleichsoperation bestimmt wurde, dass der Kredit des Benutzers ausreicht, wird vom Zugriffskontrollmodul der mit den Berechtigungsdaten übermittelte oder in der Empfangsvorrichtung 10 gespeicherte Schlüssel (Session Key) für die Entschlüsselung des in den ECM-Meldungen empfangenen Control Words freigegeben und dadurch die Entschlüsselung der verschlüsselten zugriffskontrollierten Programme und/oder Daten durch das Entschlüsselungsmodul 102 ermöglicht. Falls durch die Vergleichsoperation bestimmt wurde, dass der Kredit des Benutzers nicht ausreicht, wird vom Zugriffskontrollmodul 105 der in der Empfangsvorrichtung 10 gespeicherte Schlüssel (Session Key) für die Entschlüsselung des in den ECM-Meldungen empfangenen Control Words nicht freigegeben und dadurch die Entschlüsselung der verschlüsselten zugriffskontrollierten Programme und/oder Daten durch das Entschlüsselungsmodul verhindert.

Um verschiedene Zugriffskontrollmodule 105 mit oder ohne zusätzliches Kreditkontrollmodul zu unterstützen, können beispielsweise verschiedene Conditional Access Identifiers definiert und verwendet werden. So kann die Kreditkontrolle so ausgeführt werden, dass Kreditbedingungswerte, die einen Mindestgeldbetragswert für den Zugriff auf zugriffskontrollierte Programme und/oder Daten spezifizieren, in den ECM-Meldungen als Zugriffsbedingungsdaten an die Empfangsvorrichtung 10 übertragen werden, dass ein Berechtigungsbetragswert, der einem vorausbezahlten Geldbetragswert oder einer Kreditlimite entspricht, in der Empfangsvorrichtung 10 als Teil der Berechtigungsdaten gespeichert ist, und dass das Kreditkontrollmodul empfangene Kreditbedingungswerte mit empfangenen oder gespeicherten Berechtigungsbetragswerten vergleicht, bevor der Zugriff auf den Schlüssel (Session Key) zur Entschlüsselung von zugriffskontrollierten Programmen und/oder Daten freigegeben wird. Als weitere Funktion des Kostenerfassungsmoduls werden die Kosten für den erfolgten Zugriff auf die unverschlüsselten zugriffskontrollierten Programme und/oder Daten vom im Speicher gespeicherten Geldbetragswert subtrahiert, bzw. im Speicher addiert und mit der vordefinierten Kreditlimite verglichen.

Zum Schluss sei darauf hingewiesen, dass die Aufteilung von ausführbaren Funktionen und zu speichernden Datenelementen auf festinstallierte Speicher und Prozessoren in der Empfangsvorrichtung 10, respektive auf Speicher und Prozessoren der erwähnten aus der Empfangsvorrichtung 10 entfembaren Chipkarte, beispielsweise unter Berücksichtigung der Spezifikationen der Mobile Station Application Execution Environment (MExE, GSM 02.57 und GSM 03.57) vorgenommen werden kann. Mittels geeigneten Synchronisierungsmechanismen können Datenelemente auf der Chipkarte gespeichert und jeweils bei der Einführung der Chipkarte in die Empfangsvorrichtung 10 in festinstallierte Speicherbereiche der Empfangsvorrichtung 10 kopiert werden, wo sie für Echtzeitoperationen zur Verfügung stehen. Veränderte Werte der in den festinstallierten Speicherbereichen gespeicherten Datenelemente können, beispielsweise durch einen parallelen Prozess, auf der Chipkarte aktualisiert werden. Der Fachmann wird verstehen, dass insbesondere vertrauliche Daten, die zwischen Prozessen ausgetauscht werden, die auf mehrere Prozessoren verteilt sind, aus Sicherheitsgründen jeweils gesichert übertragen werden.

### Liste der Bezugszeichen

- 10: Empfangsvorrichtung
101 Eingabeelemente
102 Entschüsselungsmodul
103 Broadcastempfänger
104 Kommunikationsmodul
105 Zugriffskontrollmodul
111 Akustisches Ausgabegerät
112 Visuelles Ausgabegerät
- 20: Zentraleinheit
201 Clearingmodul
202 Kommunikationsmodul
203 Zugriffsverwaltungsmodul
- 30: Broadcastsender
301 Sendeplanmodul
302 Erfassungsmodul für Benutzerverhalten
- 40: Geldinstitut
401 Benutzerkonto
- 41: Geldinstitut
411 Anbieterkonto
- 50: Kommunikationsnetz
501 Kommunikationskanal
502 Kommunikationskanal
- 51: Broadcastsendeantenne
511 Luftschnittstelle
512 Broadcastkabelnetz

## Patentansprüche

1. Verfahren zur Verrechnung von zugriffskontrollierten Programmen und/oder Daten, die verschlüsselt und unidirektional von einem Broadcastsender (30) verbreitet werden, **dadurch gekennzeichnet,**
**dass** die zugriffskontrollierten Programme und/oder Daten von mindestens einer mobilen Empfangsvorrichtung (10) empfangen werden, wobei die verschlüsselt verbreiteten, zugriffskontrollierten Programme und/oder Daten in der mobilen Empfangsvorrichtung (10) entschlüsselt werden, wenn empfangene Zugriffsbedingungsdaten der zugriffskontrollierten Programme und/oder Daten mit Berechtigungsdaten eines Benutzers der mobilen Empfangsvorrichtung (10) übereinstimmen,
**dass** Zugriffsrequestdaten für einen Zugriff auf die zugriffskontrollierten Programme und/oder Daten von der mobilen Empfangsvorrichtung (10) über ein Mobilfunknetz (50) an eine Zentraleinheit (20) übermittelt werden, wobei mindestens ein Teil der Zugriffsrequestdaten vom Benutzer anhand der empfangenen Zugriffsbedingungsdaten bestimmt wird,
**dass** die Zentraleinheit (20) mindestens Teile der Berechtigungsdaten entsprechend den übermittelten Zugriffsrequestdaten über das Mobilfunknetz (50) an die mobile Empfangsvorrichtung (10) übermittelt,
**dass** Clearingdaten basierend auf Daten der mobilen Empfangsvorrichtung (10) von der Zentraleinheit (20) an ein Clearingmodul (201) übermittelt werden, welche Clearingdaten Verrechnungsdaten für den genannten Zugriff auf die unverschlüsselten zugriffskontrollierten Programme und/oder Daten sowie Benutzerdaten umfassen und welche Benutzerdaten Informationen über den Zugriff umfassen und
**dass** das Clearingmodul (201) entsprechend den empfangenen Clearingdaten dem Anbieter der zugriffskontrollierten Programme und/oder Daten sowie dem Benutzer Leistungen gutschreibt und/oder belastet und/oder dem Anbieter Informationen zur Verfügung stellt, welche Informationen durch das Clearingmodul (201) gemäss festgelegten Weiterverwendungsbedingungen basierend auf den Benutzerdaten generiert werden.

2. Verfahren nach Anspruch 1, **dadurch gekennzeichnet, dass** zur Entschlüsselung der zugriffskontrollierten Programme und/oder Daten die Zentraleinheit (20) gemäss den empfangenen Zugriffsrequestdaten ein Datatoken generiert und an die Empfangsvorrichtung (10) übermittelt, wobei ein Datatoken jeweils Daten, welche mindestens Teile eines Schlüssel zu den zugriffskontrollierten verschlüsselten Programmen und/oder Daten umfassen, oder eine Zugriffserlaubnis auf einen Schlüssel zum Entschlüsseln von zugriffskontrollierten Programmen und/oder Daten umfasst.

3. Verfahren nach Anspruch 1 oder 2, **dadurch gekennzeichnet, dass** die Zugriffsrequestdaten mindestens gewisse der Weiterverwendungsbedingungen für die Benutzerdaten umfassen, welche mindestens gewissen Weiterverwendungsbedingungen in den Zugriffsrequestdaten vom Benutzer über die Eingabeelemente (101) der Empfangsvorrichtung (10) festgelegt werden.

4. Verfahren nach einem der Ansprüche 1 bis 3, **dadurch gekennzeichnet, dass** die Zugriffsbedingungsdaten Kostenparameter umfassen, welche die Kostenbeträge für den Zugriff auf die zugriffskontrollierten Programme und/oder Daten pro Berechnungseinheit umfassen.

5. Verfahren nach einem der Ansprüche 1 bis 4, **dadurch gekennzeichnet, dass** die Verrechnungsdaten Verrechnungsparameter zur Belastung oder Gutschrift von Geldbetragswerten an den Benutzer und/oder den Anbieter gemäss den bezogenen zugriffskontrollierten Programmen und/oder Daten umfassen.

6. Verfahren nach einem der Ansprüche 1 bis 5, **dadurch gekennzeichnet, dass** die Clearingdaten mindestens teilweise periodisch während des Zugriffs auf die zugriffskontrollierten Programme und/oder Daten von der Empfangsvorrichtung (10) an die Zentraleinheit (20) übermittelt werden.

7. Verfahren nach Anspruch 6, **dadurch gekennzeichnet, dass** ein Geldbetragswert in einem Datenspeicher der Empfangsvorrichtung (10) gespeichert wird, in der Empfangsvorrichtung basierend auf den Kostendaten der empfangenen Zugriffsbedingungsdaten Kosten für den Zugriff auf die zugriffskontrollierten Programme und/oder Daten bestimmt werden und Clearingdaten an die Zentraleinheit (20) übermittelt werden, wenn die bestimmten Kosten den gespeicherten Geldbetragswert oder ein ganzes Vielfaches davon überschreiten und/oder ein vordefiniertes Zeitfenster abgelaufen ist.

8. Verfahren nach Anspruch 6 oder 7, **dadurch gekennzeichnet, dass** die von der Empfangsvorrichtung (10) an die Zentraleinheit (20) übermittelten Clearingdaten Datensätze umfassen, welche der Benutzer vor der Übermittlung bestimmt.

9. Verfahren nach einem der Ansprüche 1 bis 8, **dadurch gekennzeichnet, dass** der Anbieter der zugriffskontrollierten Programme und/oder Daten die Verbreitung der zugriffskontrollierten Programme und/oder Daten basierend auf Benutzerdaten verändert.

10. Verfahren nach einem der Ansprüche 1 bis 9, **dadurch gekennzeichnet, dass** die Zugriffsrequestdaten vom Benutzer über Eingabeelemente (101) der Empfangsvorrichtung (10) festlegbare Daten umfassen, mit welchen der Benutzer dem Anbieter individuelle Wünsche und/oder Bestellungen für die Ausstrahlung zugriffskontrollierter Programme und/oder Daten angibt.

11. Verfahren nach einem der Ansprüche 1 bis 10, **dadurch gekennzeichnet, dass** in der Empfangsvorrichtung (10) Verrechnungsbelege, welche Informationen entsprechend den Kostenbeträgen für den Zugriff auf die zugriffskontrollierten Programme und/oder Daten und/oder eine Identifizierung des Anbieters dieser zugriffskontrollierten Programme und/oder Daten umfassen, generiert und in einem Datenspeicher der Empfangsvorrichtung (10) gespeichert werden.

12. Verfahren nach Anspruch 11, **dadurch gekennzeichnet, dass** die genannten Informationen und/oder Verrechnungsbelege in einem Datenspeicher gespeichert werden, der in einer Chipkarte integriert ist, die aus der Empfangsvorrichtung (10) entfernbar ist.

13. Verfahren nach einem der Ansprüche 1 bis 12, **dadurch gekennzeichnet, dass** die Programme digitale Audio- und/oder Videoprogramme umfassen.

14. Verfahren nach einem der Ansprüche 1 bis 13, **dadurch gekennzeichnet, dass** die mobile Empfangsvorrichtung (10) ein Mobilfunkgerät ist.

15. Verfahren nach einem der Ansprüche 1 bis 14, **dadurch gekennzeichnet, dass** ein Geldbetragswert in einem Datenspeicher der Empfangsvorrichtung (10) gespeichert wird, dass in der Empfangsvorrichtung (10) basierend auf den Kostendaten der empfangenen Zugriffsbedingungsdaten Kosten für den Zugriff auf die zugriffskontrollierten Programme und/oder Daten bestimmt werden, dass die Entschlüsselung der zugriffskontrollierten Programme und/oder Daten in der Empfangsvorrichtung (10) verhindert wird, wenn die bestimmten Kosten grösser als der gespeicherte Geldbetragswert sind und dass die Kosten für den Zugriff auf die unverschlüsselten zugriffskontrollierten Programme und/oder Daten vom gespeicherten Geldbetragswert subtrahiert werden.

16. Verfahren nach Anspruch 15, **dadurch gekennzeichnet, dass** der genannte Datenspeicher zur Speicherung des Geldbetragswertes eine entfernbare, wiederaufladbare Chipkarte ist.

17. Kommunikationssystem umfassend mindestens einen Broadcastsender (51 ), der Programme und/oder Daten verschlüsselt und unidirektional verbreitet, **dadurch gekennzeichnet,**
**dass** das Kommunikationssystem mindestens eine mobile Empfangsvorrichtung (10) mit einem Broadcastempfänger (103) für den Empfang der verbreiteten Programme und/oder Daten umfasst, wobei die Empfangsvorrichtung (10) ein Zugriffskontrollmodul (105) umfasst, das die Entschlüsselung der verschlüsselt verbreiteten, zugriffskontrollierten Programme und/oder Daten freigibt, wenn entsprechende, empfangene Zugriffsbedingungsdaten mit Berechtigungsdaten des Benutzers übereinstimmen, und wobei die Empfangsvorrichtung (10) ein Entschlüsselungsmodul (102) zur Entschlüsselung der Programme und/oder Daten umfasst,
**dass** das Kommunikationssystem eine Zentraleinheit (20) mit Clearingmodul (201) zur Verarbeitung von Clearingdaten sowie Kommunikationsmodule (104, 202) zur bidirektionalen Kommunikation der mobilen Empfangsvorrichtung (10) mit der Zentraleinheit (20) über ein Mobilfunknetz (50) umfasst,
**dass** die mobile Empfangsvorrichtung (10) Eingabeelemente (101) umfasst, mittles welcher Eingabeelemente (101) Zugriffsrequestdaten für den Zugriff auf zugriffskontrollierte Programme und/oder Daten durch den Benutzer mindestens teilweise anhand der empfangenen Zugriffsbedingungsdaten festlegbar sind, wobei die Zugriffsrequestdaten von der Empfangsvorrichtung (10) an die Zentraleinheit (20) über das Mobilfunknetz (50) übermittelt werden,
**dass** die Zentraleinheit (20) ein Zugriffsverwaltungsmodul (203) umfasst, welches entsprechend den übermittelten Zugriffsrequestdaten mindestens Teile der Berechtigungsdaten über das Mobilfunknetz (50) an die mobile Empfangsvorrichtung (10) übermittelt,
**dass** das Clearingmodul (201) Mittel umfasst, welche entsprechend den empfangenen Clearingdaten dem Anbieter sowie dem Benutzer Leistungen gutschreiben und/oder belasten und/oder dem Anbieter Informationen bezüglich der Benutzerdaten zur Verfügung stellen, welche Informationen gemäss festgelegten Bedingungen durch die Zentraleinheit (20) generiert werden.

18. Kommunikationssystem nach Anspruch 17, **dadurch gekennzeichnet, dass** das Zugriffsverwaltungsmodul (203) der Zentraleinheit (20) Mittel zur Generierung von Datatoken umfasst, welche Datatoken von der Zentraleinheit (20) an die Empfangsvorrichtung (10) übermittelbar sind, wobei ein Datatoken jeweils Daten zu einem entsprechenden Schlüssel zu den zugriffskontrollierten verschlüsselten Programmen und/oder Daten oder eine Zugriffserlaubnis auf einen Schlüssel zum Entschlüsseln von zugriffskontrollierten Programmen und/oder Daten umfasst.

19. Kommunikationssystem nach Anspruch 17 oder 18, **dadurch gekennzeichnet, dass** die Zugriffsrequestdaten mindestens teilweise die Weiterverwendungsbedingungen für die Benutzerdaten umfassen, welche mindestens teilweisen Weiterverwendungsbedingungen vom Benutzer über die Eingabeelemente (101) der Empfangsvorrichtung (10) festlegbar sind.

20. Kommunikationssystem nach einem der Ansprüche 17 bis 19, **dadurch gekennzeichnet, dass** die Zugriffsrequestdaten Kostenparameter umfassen, welche die Kostenbeträge für den Zugriff auf die zugriffskontrollierten Programme und/oder Daten pro Berechnungseinheit umfassen.

21. Kommunikationssystem nach einem der Ansprüche 17 bis 20, **dadurch gekennzeichnet, dass** die Verrechnungsdaten Verrechnungsparameter zur Belastung oder Gutschrift von Geldbetragswerten an den Benutzer und/oder den Anbieter gemäss den bezogenen zugriffskontrollierten Programmen und/oder Daten umfassen.

22. Kommunikationssystem nach einem der Ansprüche 17 bis 21, **dadurch gekennzeichnet, dass** die Clearingdaten mindestens teilweise vor, nach oder periodisch während des Zugriffs auf die zugriffskontrollierten Programme und/oder Daten von der Empfangsvorrichtung (10) an die Zentraleinheit (20) übermittelbar sind.

23. Kommunikationssystem nach Anspruch 22, **dadurch gekennzeichnet, dass** die Empfangsvorrichtung (10) einen Datenspeicher umfasst, in welchem Datenspeicher ein Geldbetragswert speicherbar ist, dass die Empfangsvorrichtung (10) ein Kostenerfassungsmodul umfasst, mittels welchem Kostenerfassungsmodul basierend auf den Kostendaten der empfangenen Zugriffsbedingungsdaten Kosten für den Zugriff auf die zugriffskontrollierten Programme und/oder Daten bestimmbar sind, und dass Clearingdaten mittels der Kommunikationsmodule (104/202) an die Zentraleinheit (20) übermittelbar sind, wenn die bestimmten Kosten den gespeicherten Geldbetragswert oder ein ganzes Vielfaches davon überschreiten.

24. Kommunikationssystem nach Anspruch 22 oder 23, **dadurch gekennzeichnet, dass** die von der Empfangsvorrichtung (10) an die Zentraleinheit (20) übermittelten Clearingdaten Datensätze umfassen, welche für den Benutzer vor der Übermittlung bestimmbar sind.

25. Kommunikationssystem nach einem der Ansprüche 17 bis 24, **dadurch gekennzeichnet, dass** der Broadcastsender (30) des Anbieters der zugriffskontrollierten Programme und/oder Daten ein Sendeplanmodul (301) umfasst, mittels welchem die Verbreitung der zugriffskontrollierten Programme und/oder Daten entsprechend Benutzerdaten verändert wird.

26. Kommunikationssystem nach einem der Ansprüche 17 bis 25, **dadurch gekennzeichnet, dass** die Empfangsvorrichtung (10) einen Datenspeicher zum Speichern von Verrechnungsbelegen umfasst, die Informationen entsprechend den Kostenbeträgen für den Zugriff auf die zugriffskontrollierten Programme und/oder Daten umfassen und/oder eine Identifizierung des Anbieters dieser zugriffskontrollierten Programme und/oder Daten umfassen.

27. Kommunikationssystem nach einem der Ansprüche 17 bis 26, **dadurch gekennzeichnet, dass** die genannten Informationen und/oder Verrechnungsbelege in einem Datenspeicher speicherbar sind, der in einer Chipkarte integriert ist, die aus der Empfangsvorrichtung entfernbar ist.

28. Kommunikationssystem nach einem der Ansprüche 17 bis 27, **dadurch gekennzeichnet, dass** die Programme digitale Audio- und/oder Videoprogramme umfassen.

29. Kommunikationssystem nach einem der Ansprüche 17 bis 28, **dadurch gekennzeichnet, dass** die mobile Empfangsvorrichtung (10) ein Mobilfunkgerät ist.

30. Kommunikationssystem nach einem der Ansprüche 17 bis 29, **dadurch gekennzeichnet, dass** die Empfangsvorrichtung (10) einen Datenspeicher umfasst, in welchern ein Geldbetragswert gespeichert ist, dass die Empfangsvorrichtung (10) ein Kostenerfassungsmodul umfasst, das basierend auf den empfangenen Zugriffsbedingungsdaten Kosten für den Zugriff auf die zugriffskontrollierten Programme und/oder Daten bestimmt, dass die Empfangsvorrichtung (10) Mittel umfasst, um die Entschlüsselung der zugriffskontrollierten Programme und/oder Daten in der Empfangsvorrichtung (10) zu verhindern, wenn die bestimmten Kosten grösser als der gespeicherte Geldbetragswert sind und dass das Kostenerfassungsmodul so eingerichtet ist, dass es die Kosten für den Zugriff auf die unverschlüsselten zugriffskontrollierten Programme und/oder Daten vom gespeicherten Geldbetragswert subtrahiert.

31. Kommunikationssystem nach Anspruch 30, **dadurch gekennzeichnet, dass** der genannte Datenspeicher zur Speicherung des Geldbetragswertes eine entfembare, wiederaufladbare Chipkarte ist.

## Claims

1. A method for billing access-controlled programs and/or data, which are broadcast unidirectionally and encrypted by a broadcast transmitter (30) **characterized in that**,
- the access-controlled programs and/or data are received by at least one mobile receiving device (10), the encrypted broadcast programs and/or data being decrypted in the mobile receiving device (10), if received access conditions data for the access-controlled programs and/or data coincide with authorization data of the user of the mobile receiving device (10).
- access request data for access to the access-controlled programs and/or data are transmitted from the mobile receiving device (10) over a mobile radio network to a central unit (20), at least part of the access request data being specified by the user on the basis of the received access conditions data,
- the central unit (20) transmits at least parts of the authorization data over the mobile radio network to the mobile receiving device (10) in accordance with the transmitted access request data,
- clearing data based on the data of the mobile receiving device (10) are transmitted by the central unit (20) to a clearing module (201), which clearing data comprise billing data for the said access to the unencrypted access-controlled programs and/or data as well as user data, and which user data comprise information about the access, and
- the clearing module (201) credits and/or debits services or payments to the vendor of the access-controlled programs and/or data as well as to the user, in accordance with the received clearing data, and/or makes available information to the vendor, which information is generated by the central unit (20), based on the user data, according to specified conditions on further use.

2. The method according to claim 1, **characterized in that** for decryption of the access-controlled programs and/or data, in accordance with the received access request data, the central unit (20) generates a data token, and transmits it to the receiving device (10), a data token comprising in each case data that include at least portions of a key to the access-controlled encrypted programs and/or data or an access authorization for a key for decryption of access-controlled programs and/or data.

3. The method according to claim 1 or 2, **characterized in that** access request data comprise at least certain of the conditions on further use of the user data, which at least certain conditions on further use are specified by the user in the access request data via the input elements (101) of the receiving device (10).

4. The method according to one of the claims 1 to 3, **characterized in that** the access conditions data comprise cost parameters, which include the cost amounts for the access to the access-controlled programs and/or data per unit of calculation.

5. The method according to one of the claims 1 to 4, **characterized in that** the billing data comprise billing parameters for debiting or crediting monetary amounts to the user and/or vendor according to the obtained access-controlled programs and/or data.

6. The method according to one of the claims 1 to 5, **characterized in that** during the access to the access-controlled programs and/or data, at least parts of the clearing data are transmitted periodically by the receiving device (10) to the central unit (20).

7. The method according to claim 6, **characterized in that** a monetary value is stored in a data memory of the receiving device (10), costs for the access to the access-controlled programs and/or data are determined in the receiving device based on the cost data of the received access conditions data, and clearing data are transmitted to the central unit (20) if the added up costs for access exceed the stored monetary value, or a whole multiple of the stored monetary value, and/or a predetermined time window has expired.

8. The method according to claim 6 or 7, **characterized in that** the clearing data transmitted from the receiving device (10) to the central unit (20) comprise data records which the user determines before the transmission.

9. The method according to one of the claims 1 to 8, **characterized in that** the vendor of the access-controlled programs and/or data changes the broadcasting of the access-controlled programs and/or data based on user data.

10. The method according to one of the claims 1 to 9, **characterized in that** the access request data comprise data specifiable by the user via input elements (101) of the receiving device (10), with which the user indicates to the vendor individual wishes and/or orders for the broadcasting of access-controlled programs and/or data.

11. The method according to one of the claims 1 to 10, **characterized in that** billing records are generated in the receiving device (10) and are stored in a data memory of the receiving device (10), which records comprise information corresponding to the cost amounts for the access to the access-controlled programs and/or data and/or an identification of the vendor of these access-controlled programs and /or data.

12. The method according to claim 11, **characterized in that** the said information and/or billing records are stored in a data memory which is integrated into a chip card that is removable from the receiving device (10).

13. The method according to one of the claims 1 to 12, **characterized in that** the programs comprise digital audio and/or video programs.

14. The method according to one of the claims 1 to 13, **characterized in that** the mobile receiving device (10) is a mobile radio device.

15. The method according to one of the claims 1 to 14, **characterized in that** a monetary value is stored in a data memory of the receiving device (10), costs for the access to the access-controlled programs and/or data are determined in the receiving device (10) based on the cost data of the received access conditions data, the decryption of the access-controlled programs and/or data is prevented in the receiving device (10) if the determined costs are greater than the stored monetary value, and the costs for the access to the unencrypted access-controlled programs and/or data are deducted from the stored monetary value.

16. The method according to claim 15, **characterized in that** the said data memory for storing the monetary value is a removable, reloadable chip card.

17. A communications system comprising at least one broadcast transmitter (51), which encrypts and broadcasts programs and/or data unidirectionally **characterized in that**,
- the communications system comprises at least one mobile receiving device (10) with a broadcast receiver (103) for receiving the broadcast programs and/or data, the receiving device (10) comprising an access control module (105), which releases the decryption of encrypted, broadcast access-controlled programs and/or data if received access conditions data coincide with authorization data of the user, and the receiving device (10) comprising a decryption module (102) for decrypting programs and/or data,
- the communications system comprises a central unit (20) with clearing module (201) for processing of clearing data as well as communications modules (104/202) for bidirectional communication of the mobile receiving device (10) with the central unit (20) over a mobile radio network,
- the mobile receiving device (10) comprises input elements (101) by means of which input elements (101) access request data for the access to access-controlled programs and/or data are at least partially specifiable by the user on the basis of received access conditions data, the access request data being transmitted from the receiving device (10) to the central unit (20) over the mobile radio network
- the central unit (20) comprises an access administration module (203), which transmits at least parts of the authorization data over the mobile radio network to the mobile receiving device (10) in accordance with the transmitted access request data,
- the clearing module (201) comprises means which, in accordance with the received clearing data, credit and/or debit services or payments to the vendor as well as to the user, and/or make available to the vendor information with respect to the user data, which information is generated by the central unit (20) according to specified conditions.

18. The communications system according to claim 17, **characterized in that** the access administration module (203) of the central unit (20) comprises means for generating data tokens, which data tokens are transmittable from the central unit (20) to the receiving device (10), a data token comprising in each case data on a respective key to the access-controlled encrypted programs and/or data or an access authorization to a key for decryption of access-controlled programs and/or data.

19. The communications system according to claim 17 or 18, **characterized in that** the access request data comprise at least part of the conditions on further use of the user data, said at least part of the conditions on further use being specifiable by the user via the input elements (101) of the receiving device (10).

20. The communications system according to one of the claims 17 to 19, **characterized in that** the access request data comprise cost parameters, which include the cost amounts for the access to the access-controlled programs and/or data per unit of calculation.

21. The communications system according to one of the claims 17 to 20, **characterized in that** the billing data comprise billing parameters for debiting or crediting monetary values to the user and/or the vendor according to the obtained access-controlled programs and/or data.

22. The communications system according to one of the claims 17 to 21, **characterized in that** at least parts of the clearing data are transmittable to the central unit (20) by the receiving device (10) before, after, or periodically during the access to the access-controlled programs and/or data.

23. The communications system according to claim 22, **characterized in that** the receiving device (10) comprises a data memory, in which data memory a monetary value is storable, the receiving device (10) comprises a costs recording module by means of which costs recording module costs for the access to the access-controlled programs and/or data are able to be determined based on the cost data of the received access conditions data, and clearing data are transmittable to the central unit (20) by means of the communications module (104/202), if the added up costs for access exceed the stored monetary value, or a whole multiple of the stored monetary value, and/or a predetermined time window has expired.

24. The communications system according to claim 22 or 23, **characterized in that** the clearing data transmitted from the receiving device (10) to the central unit (20) comprise data records which are able to be determined by the user before the transmission.

25. The communications system according to one of the claims 17 to 24, **characterized in that** the broadcast transmitter (30) of the vendor of the access-controlled programs and/or data comprises a transmission plan module (301), by means of which the broadcasting of the access-controlled programs and/or data are changed in accordance with user data.

26. The communications system according to one of the claims 17 to 25, **characterized in that** the receiving device (10) comprises a data memory for storing billing records, which comprise information corresponding to the cost amounts for the access to the access-controlled programs and/or data and/or an identification of the vendor of these access-controlled programs and/or data.

27. The communications system according to one of the claims 17 to 26, **characterized in that** the said information and/or billing records are storable in a data memory which is integrated in a chip card that is removable from the receiving device.

28. The communications system according to one of the claims 17 to 27, **characterized in that** the programs comprise digital audio and/or video programs.

29. The communications system according to one of the claims 17 to 28, **characterized in that** the mobile receiving device (10) is a mobile radio device.

30. The communications system according to one of the claims 17 to 29, **characterized in that** the receiving device (10) comprises a data memory in which a monetary value is stored, the receiving device (10) comprises a costs recording module which determines costs for the access to the access-controlled programs and/or data based on the received access conditions data, the receiving module (10) comprises means of preventing the decryption in the receiving device (10) of the access-controlled programs and/or data if the determined costs are greater than the stored monetary value, and the costs recording module is set up in such a way that it deducts the costs for the access to the unencrypted access-controlled programs and/or data from the stored monetary value.

31. The communications system according to claim 30, **characterized in that** the said data memory for storing the monetary value is a removable, reloadable chip card.

## Revendications

1. Procédé pour la facturation de programmes à accès contrôlé et/ou données cryptés et diffusés de manière unidirectionnelle par un émetteur de diffusion (30), **caractérisé en ce que**,
les programmes à accès contrôlé et/ou données sont reçus par au moins un dispositif de réception mobile (10), les programmes encryptés diffusés et/ou les données ayant été décryptées dans le dispositif de réception mobile (10), lorsque les données de condition d'accès reçues pour les programmes à accès contrôlé et/ou données coïncident avec les données d'autorisation d'un utilisateur du dispositif de réception mobile (10),
des données de demande d'accès, pour un accès aux programmes à accès contrôlé et/ou données sont transmises à partir du dispositif de réception mobile (10), au moyen d'un réseau mobile (50) à une unité centrale (20), au moins une partie des données de demande d'accès est déterminée par l'utilisateur sur la base des données de conditions d'accès reçues,
l'unité centrale (20) transmet au moins une partie des données d'autorisation au moyen du réseau mobile (50) au dispositif de réception mobile (10), en accord avec les données de demande d'accès transmises.
des données d'acquittement basées sur les données du dispositif de réception mobile (10) sont transmises depuis l'unité centrale (20) à un module d'acquittement (201), lesdites données d'acquittement comprennent des données de facturation pour ledit accès aux programmes à accès contrôlé et/ou données décryptés, ainsi que des données d'utilisateurs et ces données d'utilisateurs comprenant des informations sur l'accès et,
le module d'acquittement (201) crédite et/ou débite des services ou des paiements au fournisseur des programmes à accès contrôlé et/ou données ainsi qu'à l'utilisateur, selon les données d'acquittement reçues et/ou met à disposition du fournisseur des informations, lesdites informations étant générées par le module d'acquittement (201) sont basées sur les données d'utilisateurs selon des conditions d'usage spécifiées ultérieurement.

2. Procédé selon la revendication 1, **caractérisé en ce que**, pour le décryptage des programmes à accès contrôlé et/ou données, l'unité centrale (20) génère un jeton de données selon les données de demande d'accès reçues et le transmet au dispositif de réception (10), ledit jeton de données contient en tout cas des données comprenant au moins une partie d'une clé pour les programmes à accès contrôlé et/ou données cryptés ou incluent une autorisation d'accès à une clé pour décrypter les programmes à accès contrôlé et/ou données.

3. Procédé selon la revendication 1 ou 2, **caractérisé en ce que** les données de demande d'accès, comprennent au moins certaines conditions d'usage ultérieur pour les données d'utilisateurs, lesquelles sont établies, au moins d'après certaines conditions d'usage ultérieur pour les données de demande d'accès, par l'utilisateur au moyen d'éléments d'entrée (101) du dispositif de réception (10).

4. Procédé selon une des revendications 1 à 3, **caractérisé en ce que** les données de condition d'accès comprennent des paramètres de coûts, incluant les montants des coûts pour l'accès aux programmes à accès contrôlé et/ou données pour chaque unité de facturation.

5. Procédé selon une des revendications 1 à 4, **caractérisé en ce que** les données de facturation comprennent des paramètres de facturation pour le débit ou le crédit de montants monétaires à l'utilisateur et/ou au fournisseur selon les programmes à accès contrôlé et/ou données obtenus.

6. Procédé selon une des revendications 1 à 5, **caractérisé en ce que** pendant l'accès aux programmes à accès contrôlé et/ou données, les données d'acquittement sont transmises au moins partiellement et périodiquement par le dispositif de réception (10) à l'unité centrale (20).

7. Procédé selon la revendication 6, **caractérisé en ce qu'**un montant d'une valeur monétaire est stocké dans une mémoire de données du dispositif de réception (10), les coûts d'accès aux programmes à accès contrôlé et/ou données sont déterminés dans le dispositif de réception (10) sur la base des données de coût des données de condition d'accès reçues, et les données d'acquittement sont transmises à l'unité centrale (20), lorsque les coûts déterminés sont supérieurs au montant mémorisé et/ou à un multiple entier dudit montant et/ou lorsqu'un intervalle de temps prédéfini est expiré.

8. Procédé selon la revendication 6 ou 7, **caractérisé en ce que** les données d'acquittement transmises depuis le dispositif de réception (10) à l'unité centrale (20) comprennent des éléments de données déterminés par l'utilisateur avant la transmission.

9. Procédé selon une des revendications 1 à 8, **caractérisé en ce que** le fournisseur des programmes à accès contrôlé et/ou données modifie la diffusion des programmes à accès contrôlé et/ou données en se basant sur les données d'utilisateurs.

10. Procédé selon une des revendications 1 à 9, **caractérisé en ce que** les données de demande d'accès incluent des données déterminables par l'utilisateur au moyen d'éléments d'entrée (101) du dispositif de réception (10), avec lesquels l'utilisateur transmet au fournisseur ses désirs individuels et/ou des commandes pour la diffusion de programmes à accès contrôlé et/ou données.

11. Procédé selon une des revendications 1 à 10, **caractérisé en ce que** le dispositif de réception (10) génère et stocke dans une mémoire de données dudit dispositif de réception (10) des justificatifs de facturation comprenant des informations correspondant aux montants des coûts pour l'accès aux programmes à accès contrôlé et/ou données et/ou une identification du fournisseur de ces programmes à accès contrôlé et/ou données.

12. Procédé selon la revendication 11, **caractérisé en ce que** lesdites informations et/ou les justificatifs de facturation sont stockés dans une mémoire de données intégrée dans une carte à puce amovible du dispositif de réception (10).

13. Procédé selon une des revendications 1 à 12, **caractérisé en ce que** les programmes incluent des programmes numériques audio et/ou vidéo.

14. Procédé selon une des revendications 1 à 13, **caractérisé en ce que** le dispositif de réception mobile (10) est un appareil de radio mobile.

15. Procédé selon une des revendications 1 à 14, **caractérisé en ce que** la valeur d'un montant monétaire est stockée dans une mémoire de données du dispositif de réception (10), que les coûts d'accès aux programmes à accès contrôlé et/ou données sont déterminés dans ce dispositif de réception (10) sur la base des données de coût des données de condition d'accès reçues, que le décryptage des programmes à accès contrôlé et/ou données dans le dispositif de réception (10) est bloqué lorsque les coûts déterminés sont supérieurs à la valeur du montant mémorisé et que les coûts pour l'accès aux programmes à accès contrôlé et/ou données décryptés sont soustraits de la valeur du montant mémorisé.

16. Procédé selon la revendication 15, **caractérisé en ce que** ladite mémoire de données pour le stockage de la valeur des montants monétaires est une carte à puce amovible et rechargeable.

17. Système de communication comprenant au moins un émetteur de diffusion (51) qui encrypte et diffuse des programmes et/ou des données de manière unidirectionnelle, **caractérisé en ce que**
- le système de communication comprend au moins un dispositif de réception mobile (10) avec un récepteur de diffusion (103) pour la réception de programmes diffusés et/ou de données, et que ledit dispositif de réception (10) contient un module de contrôle d'accès (105) permettant le décryptage des programmes à accès contrôlé et/ou données cryptés diffusés lorsque les données de conditions d'accès correspondantes reçues coïncident avec les données d'autorisation de l'utilisateur, et que ledit dispositif de réception (10) comprend un module de décryptage (102) pour le décryptage des programmes et/ou des données,
- le système de communication comprend une unité centrale (20) avec un module d'acquittement (201) pour le traitement des données d'acquittement, ainsi que des modules de communication (104, 202) pour la communication bidirectionnelle entre les dispositifs de réception mobile (10) et l'unité centrale (20) au moyen d'un réseau mobile (50),
- le dispositif de réception mobile (10) comprend des éléments d'entrée (101), au moyen desquels des données de demande d'accès pour l'accès aux programmes à accès contrôlé et/ou données peuvent être déterminées par l'utilisateur au moins partiellement en se basant sur les données de condition d'accès reçues, les données de demande d'accès étant transmises par le dispositif de réception (10) à l'unité centrale (20) au moyen du réseau mobile (50),
l'unité centrale (20) comprend un module d'administration d'accès (203), qui transmet au dispositif de réception mobile (10) au moins une partie des données d'autorisation au moyen du réseau mobile (50) selon les données de demande d'accès transmises,
le module d'acquittement (201) comprend des moyens qui, selon les données d'acquittement reçues, créditent et/ou débitent des services ou des paiements au fournisseur ainsi qu'à l'utilisateur, et/ou met à disposition du fournisseur des informations relatives aux données d'utilisateur, lesdites informations étant générées par l'unité centrale (20) selon des conditions spécifiées.

18. Système de communication selon la revendication 17, **caractérisé en ce que** le module d'administration d'accès (203) de l'unité centrale (20) comprend des moyens pour la génération de jetons de données, lesdits jetons de données sont transmissibles depuis l'unité centrale (20) au dispositif de réception (10), un jeton de données comprend en tout cas des données sur une clé correspondante aux programmes à accès contrôlé et/ou données cryptés ou une autorisation d'accès à une clé pour décrypter les programmes à accès contrôlé et/ou données.

19. Système de communication selon la revendication 17 ou 18, **caractérisé en ce que** les données de demande d'accès incluent au moins partiellement, les conditions d'usage ultérieur pour les données d'utilisateurs, lesdites conditions d'usage ultérieur étant déterminables, au moins partiellement, par l'utilisateur au moyen d'éléments d'entrée (101) du dispositif de réception (10).

20. Système de communication selon une des revendications 17 à 19, **caractérisé en ce que** les données de demande d'accès comprennent des paramètres de coûts incluant les montants des coûts pour l'accès aux programmes à accès contrôlé et/ou données pour chaque unité de facturation.

21. Système de communication selon une des revendications 17 à 20, **caractérisé en ce que** les données de facturation comprennent des paramètres de facturation pour le débit ou le crédit de montants monétaires à l'utilisateur et/ou au fournisseur selon les programmes à accès contrôlé et/ou données obtenus.

22. Système de communication selon une des revendications 17 à 21 **caractérisé en ce que** les données d'acquittement sont transmissibles à l'unité centrale (20) par le dispositif de réception (10) au moins partiellement, avant, après ou périodiquement pendant l'accès aux programmes à accès contrôlé et/ou données,

23. Système de communication selon la revendication 22, **caractérisé en ce que** le dispositif de réception (10) comprend une mémoire de données, dans laquelle un montant d'une valeur monétaire peut être stocké, que le dispositif de réception (10) comprend un module de saisie des coûts, au moyen duquel, les coûts d'accès aux programmes à accès contrôlé et/ou données sont déterminables sur la base des données de coût des données de conditions d'accès reçues, et que des données d'acquittement sont transmissibles à l'unité centrale (20) au moyen des modules de communication (104/202), lorsque les coûts déterminés sont supérieurs au montant mémorisé ou à un multiple entier dudit montant.

24. Système de communication selon la revendication 22 ou 23, **caractérisé en ce que** les données d'acquittement transmises depuis le dispositif de réception (10) à l'unité centrale (20) comprennent des éléments de données déterminables par l'utilisateur avant la transmission.

25. Système de communication selon une des revendications 17 à 24, **caractérisé en ce que** l'émetteur de diffusion (30) du fournisseur de programmes à accès contrôlé et/ou données comprend un module de planification d'émission (301), au moyen duquel la diffusion des programmes à accès contrôlé et/ou données est modifiée selon des données d'utilisateurs.

26. Système de communication selon une des revendications 17 à 25, **caractérisé en ce que** le dispositif de réception (10) comprend une mémoire de données pour le stockage des justificatifs de facturation contenant des informations correspondant aux montants des coûts pour accéder aux programmes à accès contrôlé et/ou données et/ou à une identification du fournisseur de ces programmes à accès contrôlé et/ou données.

27. Système de communication selon une des revendications 17 à 26, **caractérisé en ce que** lesdites informations et/ou les justificatifs de facturation peuvent être stockés dans une mémoire de données intégrées dans une carte à puce amovible du dispositif de réception (10).

28. Système de communication selon une des revendications 17 à 27, **caractérisé en ce que** les programmes comprennent des programmes numériques audio et/ou vidéo.

29. Système de communication selon une des revendications 17 à 28, **caractérisé en ce que** le dispositif mobile de réception (10) est un appareil de radio mobile.

30. Système de communication selon une des revendications 17 à 29, **caractérisé en ce que** le dispositif de réception (10) comprend une mémoire de données, dans laquelle est stocké un montant d'une valeur monétaire, que le dispositif de réception (10) comprend un module de saisie des coûts qui détermine les coûts pour l'accès aux programmes à accès contrôlé et/ou données sur la base des données de condition d'accès reçues, que le dispositif de réception (10) comprend des moyens d'empêcher le décryptage des programmes à accès contrôlé et/ou données dans le dispositif de réception (10), lorsque les coûts déterminés sont supérieurs à la valeur du montant mémorisé et que le module de saisie des coûts est agencé de façon à soustraire de la valeur du montant mémorisé les coûts d'accès aux programmes à accès contrôlé et/ou données décryptés.

31. Système de communication selon la revendication 30, **caractérisé en ce que** ladite mémoire de données pour le stockage du montant de la valeur monétaire est une carte à puce amovible et rechargeable.
